# EUROPÄISCHE PATENTSCHRIFT

(11) **EP 1 996 448 B1**
(45) Veröffentlichungstag und Bekanntmachung des Hinweises auf die Patenterteilung: **17.03.2010**
(21) Anmeldenummer: 07727154.2
(22) Anmeldetag: 21.03.2007
(51) Int. Cl.: B62K 15/00

(54) **ROLLER MIT MINDESTENS EINER SEITLICH AUSKLAPPBAREN TRITTFLÄCHENEINHEIT**
SCOOTER WITH AT LEAST ONE TREAD SURFACE UNIT WHICH CAN BE UNFOLDED LATERALLY
TROTTINETTE COMPRENANT AU MOINS UNE UNITE DE SURFACE DE BASE RABATTABLE LATERALEMENT

(30) Priorität: 21.03.2006 DE 102006012938
(43) Veröffentlichungstag der Anmeldung: 03.12.2008
(73) Patentinhaber: Schmautz, Christian, 82377 Penzberg (DE)
(72) Erfinder: Schmautz, Christian, 82377 Penzberg (DE)
(74) Vertreter: Hinkelmann, Klaus
(86) Internationale Anmeldenummer: PCT/EP2007/052677
(87) Internationale Veröffentlichungsnummer: WO 2007/107582

(56) Entgegenhaltungen:
- WO-A-02/100711
- WO-A-2006/032507
- DE-A1- 19 926 363
- DE-C1- 10 202 981
- FR-A- 1 439 425
- US-A- 5 997 023
- US-A1- 2003 075 372
- US-A1- 2005 173 175

## Beschreibung

Die vorliegende Erfindung betrifft einen Roller mit einem Rahmen, mindestens einem Vorderrad, mindestens einem Hinterrad und mit einer Lenkeinrichtung, mit der mindestens ein Vorderrad lenkbar ist.

Roller mit in der Regel zwei Rädern erfreuen sich großer Beliebtheit zur raschen Fortbewegung in der Ebene. Die Roller weisen im Allgemeinen keinen Pedalantrieb auf. Bei diesen bekannten Rollern befindet sich zwischen zwei Rädern zentral angeordnet eine relativ lange stationäre Trittfläche. Unter "stationär" ist hierbei zu verstehen, dass die Trittfläche fest angebracht ist. Die Position der Trittfläche relativ zu den Rädern bzw. dem Rahmen ist daher während der Fahrt nicht veränderbar.

Mittlerweile gibt es auch faltbare Roller ("Faltroller') und faltbare Fahrräder ("Falträder"). Bei diesen Faltrollern und Falträdern ist die minimal erreichbare Größe des entstehenden "Pakets" durch den relativ großen Abstand zwischen vorderem und hinterem Rad ("Radstand") bestimmt.

Die Fortbewegung wird beim Roller im Allgemeinen durch Abstoßen des Rollers mit den Beinen erzielt, wobei sich ein Bein in der Regel auf einer zentralen Trittfläche in Ruheposition befindet. Die Verwendung eines Motorantriebs für die Räder (beispielsweise eines Elektro- oder Benzinmotors) ist hierbei allerdings nicht ausgeschlossen.

In der DE-A-101 58390 wird ein Laufrad beschrieben, das in einer Ausführungsform eine Trittbretteinrichtung aufweisen kann, die allgemein durch mindestens ein Trittbrett gebildet wird, das an einer geeigneten Seite des Laufrades in Bodennähe angebracht ist.

In der DE-A-101 58 852 ist ein multifunktionales klappbares Zweirad offenbart, das einen Fußtritt aufweisen kann.

In der DE-A-199 26 363 und der DE-U-295 09 586 sind Laufräder beschrieben, die im Wesentlichen einen Aufbau wie ein Fahrrad ohne Pedalantrieb besitzen. Der Rahmen besteht aus einem Holm, der in Position und Funktion dem Querholm eines Herrenfahrrads entspricht und an dem über Gabeln luftbereifte Räder mit angebracht sind.

Die deutsche Gebrauchsmusterschrift DE-U-298 10 961 beschreibt ein Zweirad in Form eines Laufrades mit einem oben liegenden Längsrohr (8). In einer Ausführungsform dieses Zweirades (siehe Fig. 5 in DE 298 10 961 U1) ist an der Hinterradnabe (14) beiderseits des Hinterrades (4) jeweils eine klappbare Fußstütze (20) festgelegt.

Die deutsche Patentschrift DE-C-102 02 981 beschreibt ein Rollfahrzeug mit zwei Rädern, das ein als Fußstütze ausgebildetes Stützorgan aufweist, das in einer Position sein kann, in der die Stützarme quer zur Rahmenebene hinausragen. Die Höhenposition des Stützorgans ist durch die Wahl der Einstecktiefe einstellbar.

Bei dem in der deutschen Gebrauchsmusterschrift DE-U-200 21 368 beschriebenen motorlosen Rollfahrzeug können (siehe Figur 1) an der Lenkstange (12) in unterschiedlicher Höhe Fußrasten (22) fixiert angebracht sein.

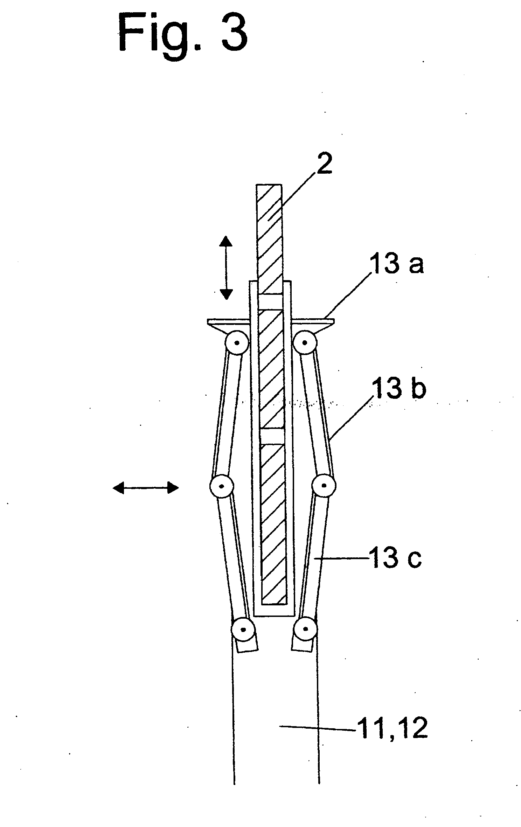

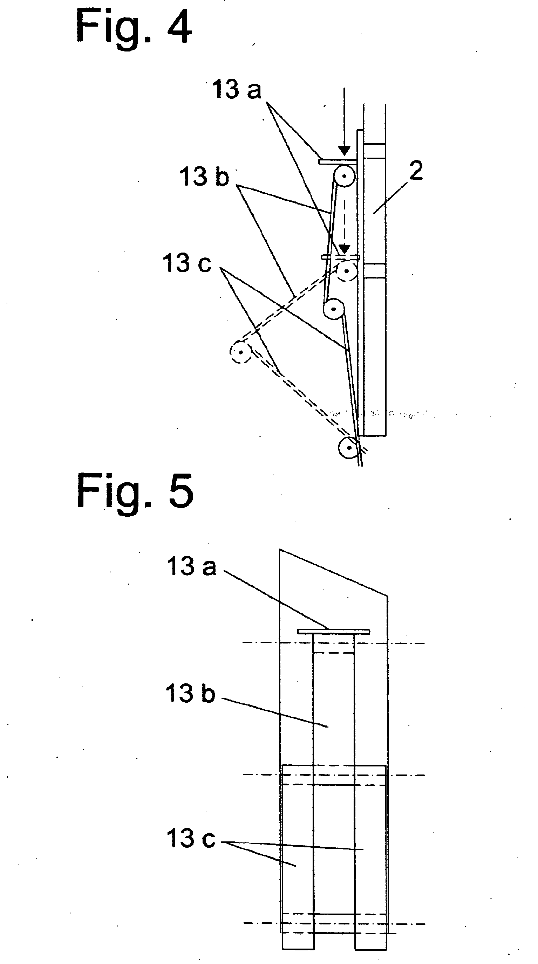

EP-A-0 229 597 offenbart ein gefaltetes Moped mit einer zusammenklappbaren Stütze für den Sattel, die aus zwei parallelen Säulen besteht, mit unteren gelenkigen Endteilen, die in zwei hohle Teile eingeführt sind, die an dem Rahmen befestigt sind. Die Figuren 3 und 4 beschreiben zwei sperrende Ansätze, die geeignet von zwei Fußstützen getragen werden, die drehbar von jeweiligen Ansatzstücken der Anschlagstifte unterstützt werden, so dass sie zwischen einer erhöhen unwirksamen Position und einer abgesenkten Position für den Gebrauch des Rollers drehbar sind. In der abgesenkten Position für den Gebrauch greifen die sperrenden Ansatzstücke unter der Wirkung von jeweils Druckfedern, welche die Ansatzstücke der Anschlagstifte umgeben, in zwei Löcher. Daher befinden sich die Fußstützen in einer fixierten Position, wenn das Moped zum Fahren benutzt wird. Die verschiedenen fixierten Positionen der Fußstütze - vertikal und horizontal - entsprechen dem Moped im Fahrzustand und im zusammengefalteten Zustand.

Die deutsche Offeniegungsschrift DE-A-100 45 844 beschreibt ein Fahrrad, insbesondere Klappfahrrad, sowie ein Verfahren zum Zusammenklappen eines Fahrrades. Der vordere Rahmenteil und das hintere Rahmenteil sind über ein Hauptdrehgelenk miteinander verbunden, so dass die beiden Rahmenteile aus einem verriegelten Zustand aufeinander zu in einen Klappzustand klappbar sind. Außerdem ist eine Verriegelungseinrichtung zur lösbaren Verriegelung der beiden Rahmenteile und/oder des Hauptdrehgelenkes vorgesehen.

Diese bekannten Roller oder Laufräder haben jedoch Nachteile in Bezug auf die Handhabung sowohl im Stand als auch während der Fahrt. Die herkömmlichen Roller/Laufräder besitzen eine Bauform, die insbesondere auf einen großen Radstand gerichtet ist. Hierdurch wird die Geländegängigkeit und Wendigkeit wie auch die Zusammenlegbarkeit negativ beeinflusst.

Bei den bekannten Rollern erlaubt die stationäre Trittfläche nur eine relativ geringe Bodenfreiheit. Zudem ist die Stehposition auf der Längsachse hinsichtlich der Balance nicht optimal.

In jüngster Zeit sind auch Roller bekannt geworden, die insbesondere für Abfahrten, teilweise in sehr holprigem Gelände, verwendet werden können ("Downhill"-Roller). Solche Roller unterscheiden sich von in der Ebene auf glattem Boden verwendeten insbesondere durch größere und breitere Räder. Auch bei diesen Rollern, die bisweilen Mountainscooter oder Scootboards genannt werden, befindet sich zwischen beiden Rädern eine stationäre Trittfläche.

Die nicht vorveröffentlichte WO-A-2006/032507 beschreibt einen Roller mit einem Rahmen, mindestens einem Vorderrad, mindestens einem Hinterrad und mit einer Lenkeinrichtung, mit der mindestens ein Vorderrad lenkbar ist, wobei der Roller auf der linken und/oder rechten Seite der Verbindungsachse zwischen den Vorder- und Hinterrädern (Längsachse des Rollers) zwischen dem Radmittelpunkt eines Vorderrades und dem hinteren Ende eines Hinterrades mindestens eine seitlich ausklappbare Trittflächeneinheit aufweist, die keine Kurbelfunktion ausüben kann, also nicht um 360° um eine senkrecht zur Längsachse des Rollers stehende Querachse des Rahmens gedreht werden kann. Die Trittflächeneinheit(en) kann(können) mechanisch oder mittels eines Motors ausgeklappt werden, wobei beim mechanischen Ausklappen durch Krafteinwirkung durch den Fahrer die Trittflächeneinheit bei Wegfall der Belastung in ihre Ausgangsposition zurückkehrt.

Aufgabe der Erfindung war daher die Bereitstellung eines Rollers, der die Nachteile des Standes der Technik überwindet oder überwinden kann und gegenüber herkömmlichen Rollern insbesondere einen kleineren Abstand zwischen den beiden Rädern und/oder eine kleinere Trittfläche zwischen den Rädern gestattet.

Demgemäss wurde ein Roller gefunden mit einem Rahmen, mindestens einem Vorderrad, mindestens einem Hinterrad und mit einer Lenkeinrichtung, mit der mindestens ein Vorderrad lenkbar ist, wobei der Roller der Roller auf der linken und/oder rechten Seite der Verbindungsachse zwischen den Vorder- und Hinterrädern (Längsachse des Rollers) zwischen dem Radmittelpunkt eines Vorderrades und dem hinteren Ende eines Hinterrades mindestens eine seitlich ausklappbare Trittflächeneinheit aufweist, die keine Kurbelfunktion ausüben kann, also nicht um 360° um eine senkrecht zur Längsachse des Rollers stehende Querachse des Rahmens gedreht werden kann, wobei die Trittflächeneinheit(en) mechanisch oder mittels eines Motors ausgeklappt werden kann (können) und beim mechanischen Ausklappen durch Krafteinwirkung durch den Fahrer die Trittflächeneinheit bei Wegfall der Belastung in ihre Ausgangsposition zurückkehrt, wobei sich ein Verbindungspunkt zwischen einem Lenkrohr und einem Hauptrahmen in der oberen Hälfte der durch Lenkrohr und eine Vordergebel gedachten Achse befindet und sich der Hauptrahmen im Wesentlichen gredlinig oder leicht gekrümmt in Richtung des Hinterrads erstreckt, und wobei ein Winkel zwischen Hauptrahmen und einer Tangente an Vorderrad und Hinterrad 30 bis 45° beträgt. Vorteile und Einzelheiten der Erfindung werden im Folgenden unter Bezugnahme auf die in den Figuren gezeigten besonderen Ausführungsformen der Erfindung erläutert. Bei der Beschreibung der Figuren ist eine Vorderansicht auf die ausklappbaren Trittflächeneinheiten eine Ansicht in Richtung einer Querachse eines erfindungsgemäßen Rollers bzw. des Rollerrahmens. Entsprechend ist eine Seitenansicht auf die ausklappbaren Trittflächeneinheiten eine Ansicht in Richtung der Längsachse eines erfindungsgemäßen Rollers. Erfindungsgemäß umfasst eine Trittflächeneinheit mindestens eine Trittfläche, die im Allgemeinen durch einen geeigneten Mechanismus aus einer im Wesentlichen vertikalen Position in eine im wesentlichen horizontale Position, jeweils bezogen auf die Fahrebene, gebracht werden kann.
Fig. 1 zeigt eine Seitenansicht einer Ausführungsform des Rollers der vorliegenden Erfindung.
Fig. 2 zeigt eine Ausführungsform der Erfindung, bei der die seitlich ausklappbaren Trittflächeneinheiten vergrößert dargestellt sind. Fig. 2a ist eine Vorderansicht auf die ausklappbaren Trittflächeneinheiten und Fig. 2b eine Seitenansicht.
Fig. 3 zeigt eine detaillierte Seitenansicht einer ersten Ausführungsform der ausklappbaren Trittflächeneinheit im erfindungsgemäßen Roller.
Fig. 4 zeigt eine Seitenansicht einer ersten Ausführungsform der ausklappbaren Trittflächeneinheit im erfindungsgemäßen Roller, die den Mechanismus des Ausklappens illustriert.
Fig. 5 zeigt eine Vorderansicht einer ersten Ausführungsform der ausklappbaren Trittflächeneinheit im erfindungsgemäßen Roller, die den Mechanismus des Ausklappens illustriert.
Fig. 6 zeigt eine Seitenansicht einer zweiten Ausführungsform der ausklappbaren Trittflächeneinheit im erfindungsgemäßen Roller.
Fig. 7 zeigt eine Draufsicht auf die zweite Ausführungsform der ausklappbaren Trittflächeneinheit im erfindungsgemäßen Roller. In Fig. 7a befindet sich die Trittfläche der Trittflächeneinheit in vertikaler Position, während sie sich in Fig. 7b in horizontaler Position befindet.
Fig. 8 zeigt eine Ausführungsform für einen faltbaren bzw. zerlegbaren Roller gemäß der vorliegenden Erfindung.
Fig. 9 zeigt für das Vorderrad eine erste Variante für das Falten des erfindungsgemäßen Rollers. Fig. 9a zeigt den Ausgangszustand vor dem Falten und Fig. 9b einen Zustand, bei dem sich das Vorderrad seitlich zur Hauptachse des erfindungsgemäßen Rollers befindet.
Fig. 10 zeigt für das Vorderrad eine zweite Variante für das Falten eines erfindungsgemäßen Rollers. Fig. 10a zeigt den Ausgangszustand und Fig. 10b den Zustand nach einem teilweisen Herausdrehen des Vorderrades.
Fig. 11 zeigt für das Vorderrad eine dritte Variante für das Falten eines erfindungsgemäßen Rollers. Fig. 11a zeigt den Ausgangszustand und Fig. 11b den Zustand nach Verschieben der Anordnung aus Vordergabel und Vorderrad entlang der Hauptachse des Rollers in Richtung des Hinterrades.

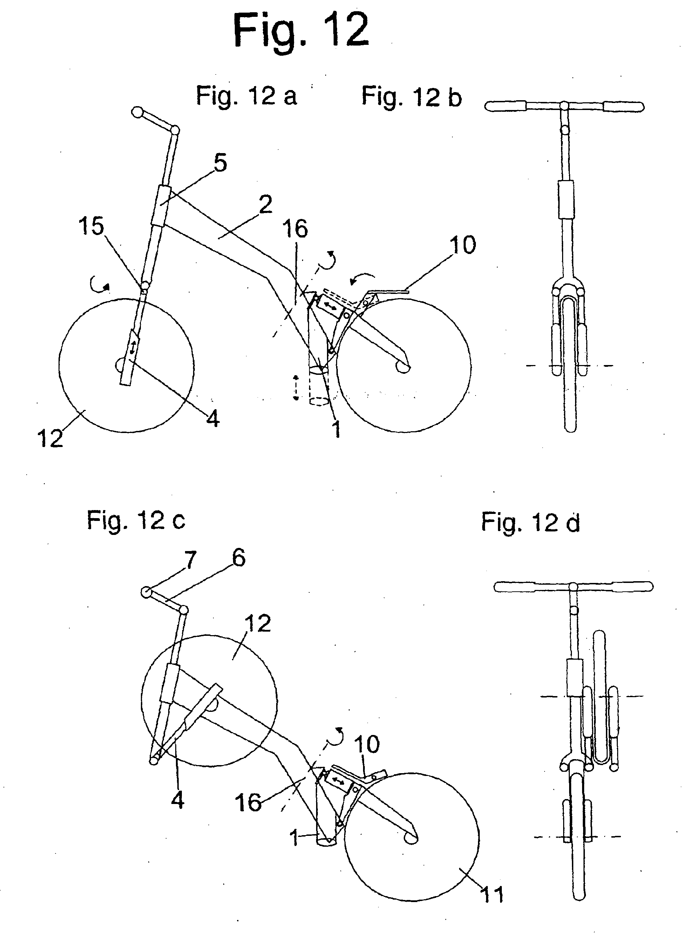

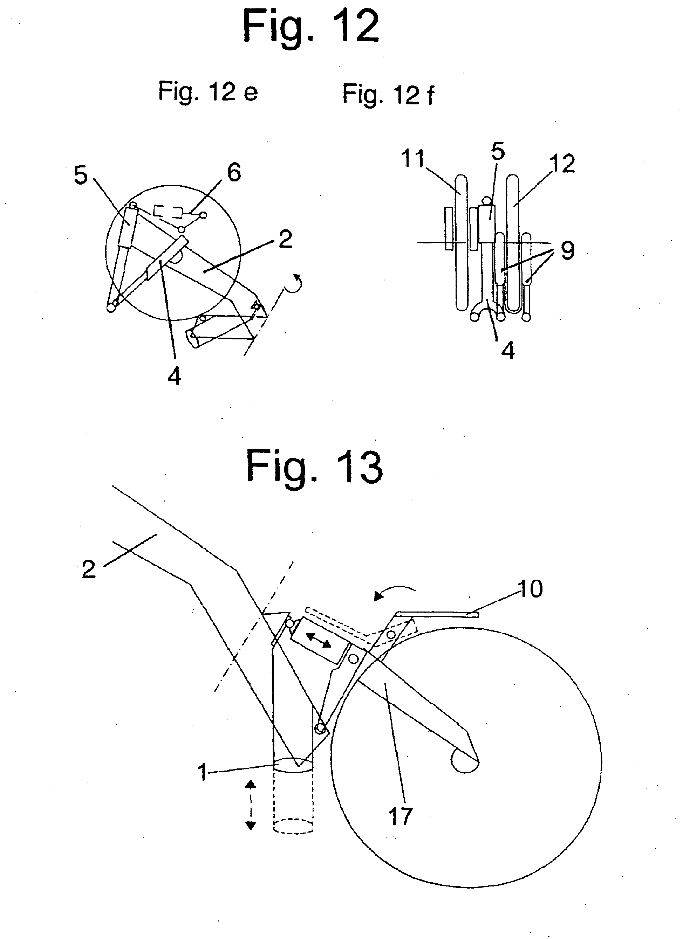

Fig. 12 zeigt eine Ausführungsform für einen faltbaren Roller gemäß der vorliegenden Erfindung. Fig. 12a zeigt den Roller im fahrbereiten Zustand, wobei die beiden Knickpunkte im Lenkrohr und Hauptrahmen hervorgehoben sind. Fig. 12b zeigt eine Vorderansicht des Rollers von Fig. 12a. Fig. 12c zeigt den Roller von Fig. 12a nach dem Falten des Vorderrades um den Knickpunkt im Lenkrohr und vor dem Falten des Hinterradteils um den Knickpunkt im Hauptrahmen in die entgegen gesetzte Richtung. Fig. 12d zeigt schematisch eine Vorderansicht des Rollers von Fig. 12c. Fig. 12e zeigt den Roller in Richtung der Räder im vollständig gefalteten Zustand. Fig. 12f zeigt schematisch eine Vorderansicht des Rollers von Fig. 12e.
Fig. 13 zeigt einen Ausschnitt einer Ausführungsform des erfindungsgemäßen Rollers, der mit einer zusätzlichen zentralen Trittfläche ausgestattet ist.
Fig. 14 zeigt eine Ausführungsform eines erfindungsgemäßen Rollers, bei der die Rahmengeometrie durch Veränderung des Winkers zwischen Lenkrohr und Hauptrahmen verändert werden kann.
Fig. 15 zeigt eine Ausführungsform eines erfindungsgemäßen Rollers, bei der die Rahmengeometrie durch Verschiebung der Teile eines zweiteiligen Hauptrahmens zueinander oder voneinander weg verkürzt oder verlängert werden kann.
Fig. 16 zeigt Ausführungsformen des erfindungsgemäßen Rollers, bei denen die Lenkergeometrie veränderbar ist. Fig. 16a zeigt die Höhenverstellbarkeit des Lenkrohrs. Fig. 16b zeigt die Höhenverstellbarkeit des Vorbaus. Fig. 16c zeigt die Verstellbarkeit des Lenkers in horizontaler Richtung. Die Figuren 16d und 16e zeigen weitere Verstellmöglichkeiten für Lenker und Vorbau.
Fig. 17 zeigt beispielhaft Ausführungsformen des erfindungsgemäßen Rollers mit verschiedenen Rahmenformen.
Fig. 18 zeigt eine bevorzugte Ausführungsform für einen erfindungsgemäßen faltbaren Roller.
Fig. 19 zeigt einen abgeknickten Teil des Hauptrahmens einer Ausführungsform des erfindungsgemäßen Rollers, bei der sich die ausklappbare Trittflächeneinheit in dem abgeknickten Teil des Hauptrahmens befindet.

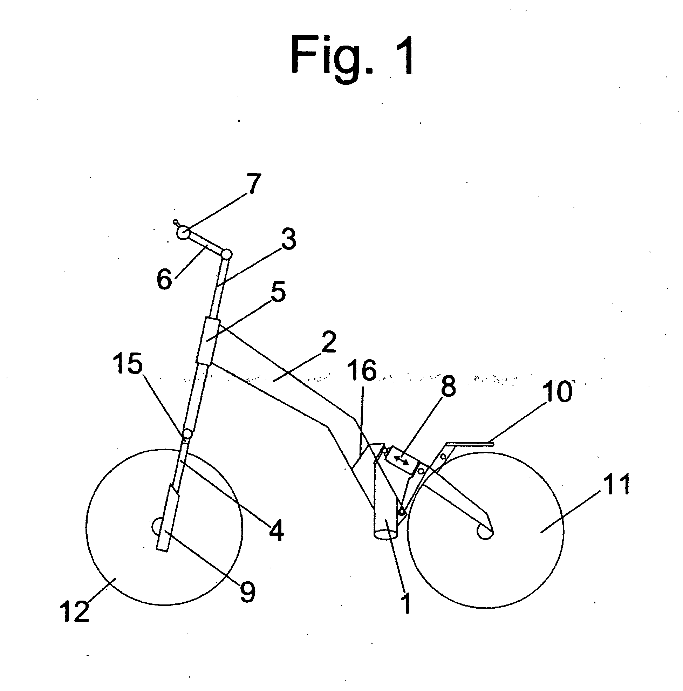

Fig. 1 zeigt eine Seitenansicht einer Ausführungsform des Rollers der vorliegenden Erfindung. In Fig. 1 ist 1 eine seitlich ausklappbare Trittflächeneinheit, 2 der Hauptrahmen, 3 das Lenkrohr (Steuerrohr), 4 die Vordergabel (Federgabel), 5 die Verbindungsstelle von Hauptrahmen 2 und Lenkrohr 3, 6 der Vorbau, 7 der Lenker, 8 die Federung für das Hinterrad, 9 ein Gabelbein (Federbein), 10 eine zentrale Trittfläche, 11 ein Hinterrad und 12 ein Vorderrad.

Die Ausführungsform von Fig. 1 weist ein Vorderrad und ein Hinterrad auf. Vorderrad oder Hinterrad können im erfindungsgemäßen Roller aber unabhängig voneinander beispielsweise auch für ein System aus jeweils zwei Rädern stehen. Wenn im Folgenden nur von einem Vorderrad und einem Hinterrad gesprochen wird, geschieht dies nur zur Vereinfachung der Beschreibung. Wenn es bei der folgenden Beschreibung der Funktionsweise der Erfindung nicht ausdrücklich anders vermerkt ist, liegen Vorderrad und Hinterrad in einer Ebene.

In der in Fig. 1 gezeigten Ausführungsform der Erfindung ist ein Vorbau 6 gezeigt, über den der Lenker 7 mit dem Lenkrohr 3 verbunden ist. Der Vorbau 6 kann aber auch weggelassen werden, so dass der Lenker 7 direkt mit dem Lenkrohr 3 verbunden ist.

Der Lenker 7 kann verschiedene Formen aufweisen. Bei der in Fig. 1 gezeigten Ausführungsform ist der Lenker 7 gerade. Der Lenker 7 kann jedoch in Abhängigkeit vom Verwendungszweck des Rollers verschieden ausgebildet sein. Beispielsweise kann es sich um einen gekröpften oder hochgezogenen Lenker handeln. Ein gerader Lenker ist insbesondere für rasche Fahrten in der Ebene vorteilhaft. Für "downhill-Roller" ist dagegen ein hochgezogener Lenker bevorzugt.

Der Lenker kann zudem abklappbar sein. Bei dieser Variante besteht der Lenker aus mehreren Teilen, wobei die Teile, welche die Griffe enthalten, beispielsweise in Richtung des Lenkrohres abgeklappt werden können. Beispielsweise können in einer Ausführungsform bei einem dreiteiligen geraden Lenker die beiden die Griffe aufweisenden Teile nach Öffnen von Fixiervorrichtungen (z.B. Halteklammern) nach unten in Richtung des Lenkrohres geklappt werden. Hierbei liegen im dreiteiligen Lenker zwei Drehpunkte vor. Allerdings kann auch ein zweiteiliger Lenker verwendet werden, bei dem die beiden Teile um einen Drehpunkt am Ende des Lenkrohrs zu den Seiten des Lenkrohrs umgelegt werden können. Bei Lenkern mit einem Vorbau können die die Griffe aufweisenden Teile vorzugsweise nach hinten umgelegt werden.

Erfindungsgemäß kann auch eine Lenker - Einheit vorgesehen sein, die sich am Verbindungsstück zwischen Lenkrohr und Hauptrahmen durch eine entriegelbare Befestigungseinheit abnehmen lässt.

Der Rahmen des erfindungsgemäßen Rollers kann je nach Verwendungszweck des Rollers verschiedene Formen aufweisen. Soll der Roller vor allem für Abwärtsfahrten eingesetzt werden ("downhill-Roller"), kann die Stabilität der Rahmenkonstruktion durch verschiedene Maßnahmen verbessert werden. Beispielsweise kann die Vordergabel 4 zur Erzielung einer erhöhten Steifigkeit eine zweite Brücke aufweisen (sogenannte "Doppelbrückengabel"). Steht dagegen die Transportierbarkeit beim erfindungsgemäßen Roller im Vordergrund, ist auch eine sehr leichte Bauweise möglich.

In Fig. 1 ist auch die optionale zentrale Trittfläche 10 gezeigt. "Zentral" bedeutet hierbei, dass die Trittfläche in Richtung der Längsachse des erfindungsgemäßen Rollers verläuft.

Der erfindungsgemäße Roller von Fig. 1 weist auf der linken und/oder rechten Seite der Längsachse des Rollers eine seitlich ausklappbare Trittflächeneinheit 1 auf, die keine Kurbelfunktion ausüben kann. Dies bedeutet, dass die Trittflächeneinheit nicht um 360° um eine Querachse des Rahmens gedreht werden kann. Die Längsachse des Rollers ist hierbei die zentrale Verbindungsachse zwischen den Vorder- und Hinterrädern 11, 12 des erfindungsgemäßen Rollers. Bei Rollern mit einem Paar von Vorderrädern und/oder Hinterrädern verläuft die Längsachse durch die Mittelpunkte der die Räder des Radpaares verbindenden Achsen. Die vorgenannte Querachse des Rahmens geht im Allgemeinen durch den Mittelpunkt der Trittflächeneinheit.

Der Roller der vorliegenden Erfindung weist somit im Gegensatz zu Fahrrädern mit Kettenantrieb keine Tretkurbel auf. Allerdings ist es möglich, dass die Trittflächeneinheit 1 in gewissem Umfang um die durch den Mittelpunkt der Trittflächeneinheit 1 gedachte Querachse gedreht werden kann. Vorzugsweise kann hierbei die Trittflächeneinheit 1 ausgehend von ihrer horizontalen Position (d.h. parallel zur Fahrebene) in beiden Richtungen um jeweils weniger als 70°, besonders bevorzugt um weniger als 45° und am meisten bevorzugt um weniger als 30° um die durch den Mittelpunkt der Trittfläche 1 gedachte Querachse gedreht werden.

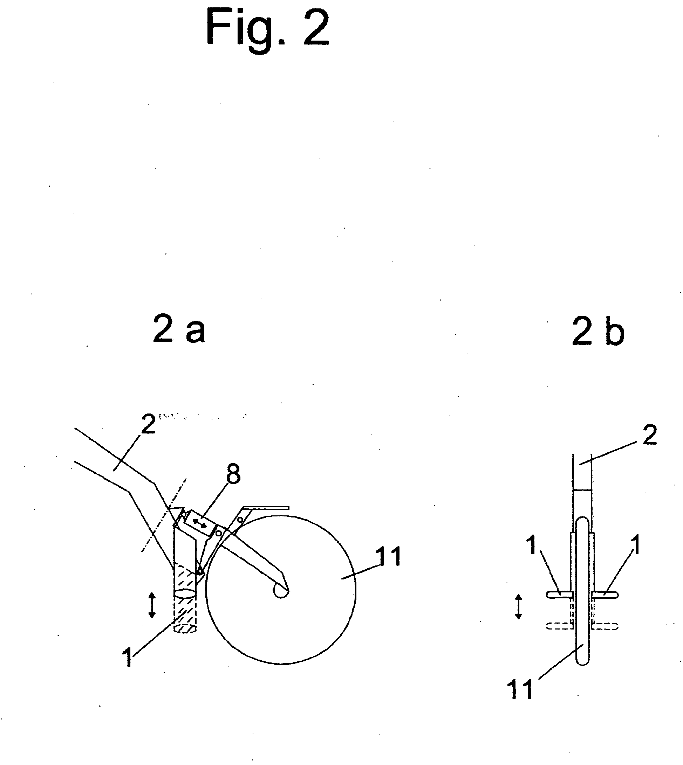

Die Figuren 2 bis 7 zeigen Ausführungsformen für Trittflächeneinheiten in den erfindungsgemäßen Rollern und illustrieren deren Klappmechanismus.

Fig. 2 zeigt eine Ausführungsform der Erfindung, bei der die seitlich ausklappbaren Trittflächeneinheiten 1 vergrößert dargestellt sind. Fig. 2a ist eine Vorderansicht auf die seitlich ausklappbaren Trittflächeneinheiten und Fig. 2b eine Seitenansicht. In Fig. 2a bedeutet 11 ein Hinterrad und 8 ein Federsystem. Die Trittflächeneinheiten 1 weisen in Fig. 2a und 2b ebene Trittflächen auf. Es sind erfindungsgemäß jedoch auch andere Flächen denkbar. Beispielsweise können die Trittflächen an einem Ende oder an beiden Enden nach oben gezogen sein. Außerdem kann die Trittflächeneinheit 1 so gestaltet sein, dass der Abstand der Trittfläche von der Fahrbahn vor oder während der Fahrt beispielsweise durch eine Federmechanik und / oder durch Einstellung fester Abstandswerte variiert werden kann.

Fig. 3 zeigt eine detaillierte Seitenansicht einer ersten Ausführungsform der ausklappbaren Trittflächeneinheit 1 im erfindungsgemäßen Roller. In Fig. 3 bedeuten 11 und 12 Hinterrad bzw. Vorderrad, 13a eine kleine Antrittsfläche, die beispielsweise dem Aufnehmen eines Fußes beim mechanischen Ausklappen der gesamten Trittfläche 13 dient. Nach dem vollständigen Ausklappen der Trittflächenflächeneinheit 1 besteht bei dieser Ausführungsform die Trittfläche 13 aus den Abschnitten 13a, 13b und 13c. Die Antrittsflächen 13a sind links und/oder rechts von der Längsachse des Rollers angeordnet. Durch Druck auf eine parallel zur Fahrebene liegende Antrittsfläche 13a werden die im belastungsfreien Zustand im Wesentlichen vertikal angeordneten Trittflächenabschnitte 13b und 13c von der Längsachse des Rollerrahmens entfernt. Nimmt der Druck auf die Antrittsebene 13a ab, gehen die Trittflächenabschnitte 13b und 13c aufgrund einer Federmechanik (hier nicht im Detail gezeichnet) wieder in die vertikale Ausgangsposition zurück.

Fig. 4 zeigt eine Seitenansicht einer ersten Ausführungsform der ausklappbaren Trittflächeneinheit 1 im erfindungsgemäßen Roller, die den Mechanismus des Ausklappens gemäß Fig. 3 illustriert. 2 bedeutet den Hauptrahmen. Der gestrichelte Teil zeigt den Zustand nach einem teilweisen Herunterdrücken der Antrittsfläche 13a.

Fig. 5 zeigt eine Vorderansicht der ersten Ausführungsform der ausklappbaren Trittflächeneinheit 1 von Fig. 4 vor dem Ausklappen. Im ausgeklappten Zustand befinden sich die Trittflächenabschnitte 13a, 13b und 13c in einer Ebene im gleichen Abstand von der Fahrebene. Die durch die Trittflächenabschnitte 13a, 13b und 13c gebildete Trittfläche 13 kann durch eine weitere Federmechanik hinsichtlich des Abstands zum Boden variabel ausgestaltet sein. In einer weiteren Ausführungsform der Erfindung kann der Abstand zum Boden fest auf einen oder mehrere Werte einstellbar sein.

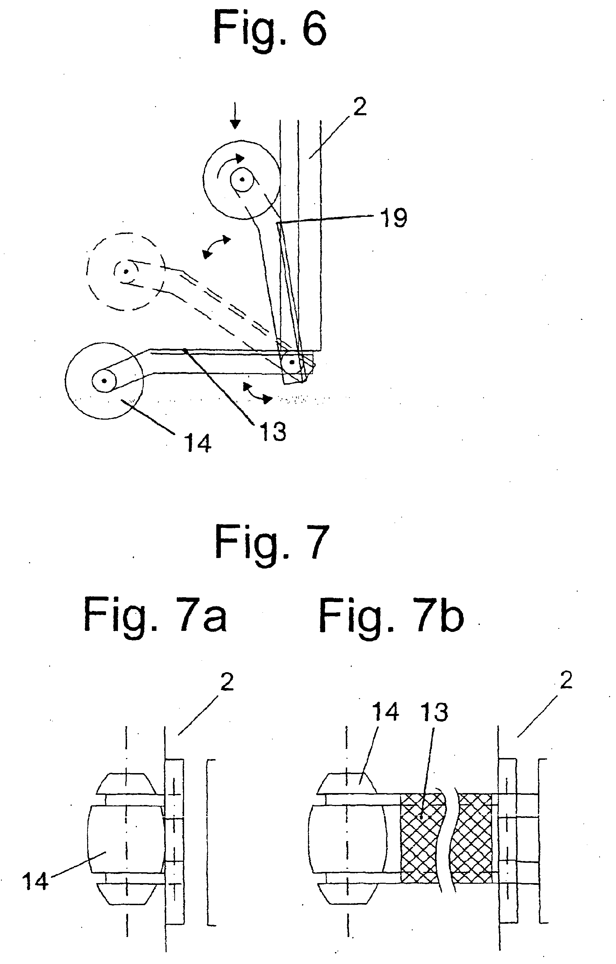

Fig. 6 zeigt eine Seitenansicht einer zweiten Ausführungsform der ausklappbaren Trittflächeneinheit 1 im erfindungsgemäßen Roller. Die Trittflächeneinheit 1 ist hierbei auf der linken Seite der Längsachse des Rollers angeordnet. In Fig. 6 bedeutet 2 den Hauptrahmen und 14 eine Trittrolle. Das Ausklappen der Trittfläche 13 wird bei dieser zweiten Ausführungsform dadurch bewirkt, dass die vorzugsweise in Fahrtrichtung nur im Uhrzeigersinn drehbare linke Trittrolle 14 nach unten gedrückt wird. Dabei wird die Trittfläche 13 von der vertikalen Position in die zur Fahrt gewünschte horizontale Position gebracht. Vorzugsweise klappt auch bei dieser zweiten Ausführungsform die Trittfläche 13 beim Nachlassen des Druckes auf die Trittrolle 14 aufgrund des Gegendrucks einer gespannten Feder (hier nicht gezeigt) wieder in die vertikale Ausgangsposition zurück. Bei einer in Fig. 6 nicht gezeigten, auf der rechten Seite der Längsachse des Rollers angeordneten Trittflächeneinheit würde entsprechend eine vorzugsweise in Fahrtrichtung nur im entgegen gesetzten Uhrzeigersinne drehbare rechte Trittrolle nach unten gedrückt werden. Aufgrund dieser eingeschränkten Drehbarkeit der Trittrolle 14 kann der Fuß des Fahrers nicht nach außen abrutschen und bleibt nahe am Hauptrahmen. Die Oberfläche der Trittrolle 14 weist vorzugsweise eine rutschfeste Oberfläche auf. Eine rutschfeste Oberfläche kann beispielsweise durch Einstellung einer geeigneten Oberflächenstruktur (z.B. Rillen) und/oder die Verwendung von gummierten Belägen erreicht werden.

Auch bei dieser Variante kann die Trittfläche 13 durch eine weitere Federmechanik hinsichtlich des Abstands zum Boden variabel ausgestaltet sein. In einer weiteren Ausführungsform der Erfindung kann der Abstand zum Boden fest auf einen oder mehrere Werte einstellbar sein.

In Fig. 6 bedeutet 19 eine Stelle, an der sich ein zusätzliches Gelenk zur Erleichterung des mechanischen Ausklappens der seitlichen Trittflächeneinheit 1 befinden kann.

Fig. 7 zeigt Draufsichten auf die zweite Ausführungsform der ausklappbaren Trittflächeneinheit im erfindungsgemäßen Roller. Fig. 7a zeigt eine Draufsicht auf die Trittfläcfieneinheit im nicht ausgeklappten vertikalen Zustand und Fig. 7b zeigt die Draufsicht auf die Trittflächeneinheit im niedergedrückten horizontalen Zustand. 2 bedeutet den Hauptrahmen und 14 die um ihre Längsachse drehbare Trittrolle. Die Trittrolle 14 zeigt bei dieser Ausführungsform einen Querschnitt mit konvexen längeren Seiten. Die Form der Trittrolle 14 kann allerdings in weiten Bereichen variieren. Beispielsweise kann die Trittrolle 14 ein Zylinder oder eine Kugel sein.

Der Umfang der Trittrolle 14 ist vorzugsweise mindestens so groß wie die Wegstrecke, die beim Ausklappen der Trittflächeneinheit in vertikaler Richtung zurückzulegen ist.

Die Trittflächeneinheiten des Rollers der vorliegenden Erfindung weisen vorzugsweise eine rutschfeste Oberfläche auf wie es oben für die Ausführungsform von Fig. 6 und 7 beschrieben ist.

Die mindestens eine seitliche Trittflächeneinheit 1 des erfindungsgemäßen Rollers kann mechanisch oder mittels eines Motors ausgeklappt werden. Bevorzugt sind die Trittflächeneinheiten 1 des erfindungsgemäßen Rollers mechanisch ausklappbar, besonders bevorzugt durch Krafteinwirkung durch den Fahrer. Die Krafteinwirkung besteht vorzugsweise in einem Niederdrücken durch den Fahrer. Allerdings kann die Trittfläche 1 in Ausführungsformen der Erfindung durch seitliche Krafteinwirkung mechanisch ausgeklappt werden, so dass hierbei die Trittflächeneinheiten seitlich ausgeschwenkt werden.

Im Falle der mechanischen Ausklappbarkeit sind die Trittflächen so gestaltet, dass sie bei Wegfall der Belastung in ihre Ausgangsposition zurückgehen. Dies geschieht besonders bevorzugt durch einen Federmechanismus.

In Ausführungsformen der Erfindung kann zusätzlich ein Mechanismus vorgesehen sein, der ermöglicht, dass mindestens einen der seitlichen Trittflächenenheiten 1 durch mechanisches Niederdrücken in eine fixierte Position gebracht wird (beispielsweise durch Aufwendung einer größeren Kraft oder einer Kraftanwendung über eine größere Strecke und ähnliches). Die fixierte Position kann durch einen Einrastmechanismus erreicht werden. Hierbei kann durch Einwirkung einer höheren Kraft oder durch einen anderen Mechanismus diese fixierte Position wieder aufgehoben werden, derart, dass die Trittflächeneinheit 1 anschließend bei Wegfall der Belastung in ihre Ausgangsposition zurückgeht. Diese vorübergehende Arretierung kann z. B. durch ein Zugsystem mit einem Zughebel am Lenker (Bowden - Zug wie z. B. bei Bremsen) erreicht werden. Eine zweite Möglichkeit der Entriegelung der Trittflächeneinheit 1 besteht darin, dass ein Mechanismus vorsieht, dass durch seitlichen Druck nach unten auf die Trittflächeneinheit 1 eine Entriegelung erzielt wird.

Der in dieser Beschreibung verwendete Begriff "selbst einklappend" schließt daher nicht Fälle aus, bei denen unter bestimmten Umständen eine vorübergehende Arretierung der Trittflächeneinheit erreicht wird. Diese Arretierung ändert nichts daran, dass die Trittflächeneinheit der vorliegenden Erfindung prinzipiell selbst einklappend ist.

Bei der vorliegenden Erfindung kann die Trittflächeneinheit mit einem Mechanismus versehen sein, der eine Reduzierung der für das mechanische Niederdrücken der Trittflächeneinheit erforderlichen Kraft ermöglicht. Dies kann beispielsweise bei der in Fig. 6 beschriebenen Ausführungsform dadurch geschehen, dass ein zusätzliches Gelenk vorgesehen ist (z. B. in dem Knickpunkt 19), das beim Drücken auf die Trittrolle 14 sofort das Ausklappen einleitet. Zusätzlich oder alternativ kann eine vorgegebene Führung an der Rollenbefestigung das Ausklappen erleichtern, da die Trittrolle 14 sich sofort weg vom Hauptrahmen 2 bewegt. Bei beiden Varianten wird im Allgemeinen die Ausgangsposition mittels eines Federmechanismus erreicht.

Die Trittflächeneinheit 1 ist vorzugsweise sowohl auf der linken wie auch auf der rechten Seite der Längsachse des Rollers angeordnet, wobei die Trittflächeneinheiten 1 hierbei vorzugsweise selbst einklappend und vorzugsweise höhenverstellbar sind. Die Trittflächeneinheiten 1 sind hierbei einzeln oder gemeinsam höhenverstellbar. Hierbei können bestimmte Anschlagpunkte vorgegeben sein, durch die Werte für den Abstand zwischen Trittfläche und Fahrbahn festgelegt werden. Die selbst einklappenden Trittflächeneinheiten können in Ausführungsformen des erfindungsgemäßen Rollers im ausgeklappten Zustand feststellbar (fixierbar) sein. Hierbei können die Trittflächeneinheiten 1 zusätzlich auch höhenverstellbar sein. Im Allgemeinen ist es jedoch bei den Rollern der vorliegenden Erfindung bevorzugt, wenn keine Befestigung oder vorübergehende Befestigung wie oben beschrieben vorgesehen ist.

Die Trittflächeneinheit oder Trittflächeneinheiten 1 befinden sich erfindungsgemäß zwischen dem Radmittelpunkt eines Vorderrades 12 und dem hinteren Ende eines Hinterrades 11.

Vorzugsweise befindet sich die mindestens eine Trittflächeneinheit 1, d.h. deren Mittelpunkt, in der hinteren Hälfte des Rollers vor dem Mittelpunkt der Hinterradnabe. Die hintere Hälfte des Rollers ist hierbei der Teil des Rollers, der sich in der hinteren Hälfte des Abstandes zwischen den Mittelpunkten von Vorderrad 12 und Hinterrad 11 des Rollers befindet. Hierbei befindet sich die Trittflächeneinheit 1 ganz besonders bevorzugt mindestens 2 cm vor dem Mittelpunkt der Hinterradnabe.

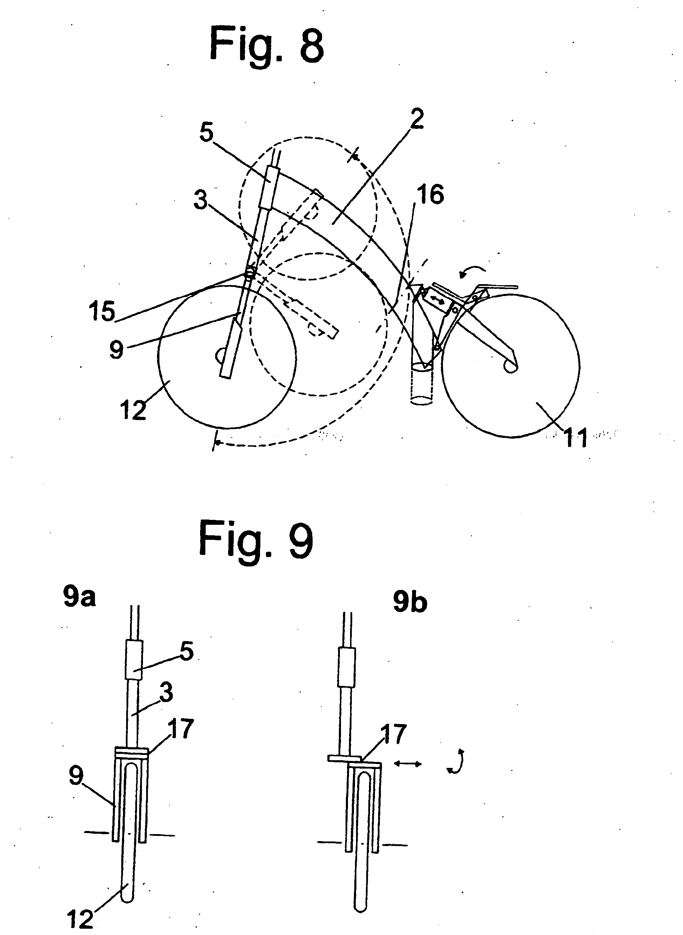

In einer bevorzugten Ausführungsform der Erfindung ist der erfindungsgemäße Roller faltbar oder zerlegbar und damit leicht transportierbar. Faltbare oder zerlegbare Ausführungsformen sind exemplarisch in den Figuren 8 bis 12 sowie 18 dargestellt. Das Falten oder Zerlegen des erfindungsgemäßen Rollers kann auf verschiedene Weise vorgenommen werden. Zur Vereinfachung der Diskussion umfasst erfindungsgemäß der Begriff "Faltbarkeit" die "Zerlegbarkeit", bei der einzelne Teile des Rollers nicht nur relativ zueinander gefaltet oder verschoben sondern auch physisch voneinander getrennt werden können. Beispielsweise kann der Lenker vom Lenkrohr abgenommen und ggf. an einer anderen Stelle des gefalteten Rollers befestigt werden.

Fig. 8 zeigt eine bevorzugte Ausführungsform für einen faltbaren Roller gemäß der vorliegenden Erfindung. Bei dieser Ausführungsform wird der Roller über mindestens einen Knickpunkt 15, 16 gefaltet. In Fig. 8 bedeutet 2 den Hauptrahmen, 3 das Lenkrohr, 5 die Verbindungsstelle zwischen Hauptrahmen 2 und Lenkrohr 3, 9 ein Gabelbein, 11 das Hinterrad, 12 das Vorderrad, 15 einen ersten Knickpunkt im Lenkrohr 3 oder in der Vordergabel 4 und 16 einen zweiten Knickpunkt im Hauptrahmen 2.

Knickpunkte sind erfindungsgemäß Punkte, Achsen oder Systeme aus Achsen und Punkten, denen gemeinsam ist, dass durch eine Bewegung von Teilen des Rollers um diese Punkte bzw. Achsen oder durch physische Trennung dieser Teile an diesen Punkten bzw. Achsen eine kompaktere Struktur des Rollers erreicht werden kann. Bei den faltbaren Ausführungsformen des erfindungsgemäßen Rollers ist es besonders bevorzugt, wenn der Roller um mindestens zwei Knickpunkte 15, 16 gedreht werden kann. Bei der vorliegenden Erfindung ist ganz besonders bevorzugt, wenn sich bei der faltbaren Ausführungsform des erfindungsgemäßen Rollers ein Knickpunkt 15 zwischen der Verbindungsstelle 5 (von Lenkrohr 3 und Hauptrahmen 2) und Vordergabel 4 befindet. Entsprechendes gilt auch für die Stellen, an denen in Ausführungsformen Teile des erfindungsgemäßen Rollers physisch voneinander getrennt werden können.

Fig. 9 zeigt anhand des Vorderrads eine erste Variante für das Falten des erfindungsgemäßen Rollers. Fig. 9a zeigt den Ausgangszustand vor dem Falten und Fig. 9b einen Zustand, bei dem sich das Vorderrad seitlich zur Hauptachse des erfindungsgemäßen Rollers befindet. Bei dieser ersten Variante umfasst der Knickpunkt 15 eine Achse in Richtung einer Querachse des Rollers, entlang der die Vordergabel 4 mit dem Vorderrad 12 geschoben werden kann, um anschließend in Richtung der Verbindungsstelle 5 gedreht zu werden.

Bei den hierin gezeigten klappbaren bzw. zerlegbaren Ausführungsformen des erfindungsgemäßen Rollers liegt im ausgeklappten Zustand an den Knickpunkten vorzugsweise eine formschlüssige Führung bzw. Verbindung der Teile des Rollers vor. D.h., dass sich an den Knickpunkten jeweils mindestens ein Paar aus einem Profil und einem Konterprofil befindet, wobei das Profil eine Schiene für das Gleiten des Konterprofils bzw. das Konterprofil eine Schiene für das Gleiten des Profils bildet. Hierzu sind dem Fachmann eine Reihe von Profilen und entsprechenden Konterprofilen bekannt, die gegeneinander verschoben, aber nicht gegeneinander gedreht werden können. Erfindungsgemäß können beispielsweise zwei formschlüssige Verbindungen, die jeweils aus einem Profil und einem Konterprofil bestehen, entlang einer ihrer Seiten als Schiene gegeneinander verschoben werden, bis eine Führungsbegrenzung freigegeben wird und Profil und Konterprofil gegeneinander gedreht werden können. Ein Beispiel hierfür ist in der Fig. 9 gezeigt, in der das System aus Vordergabel 4 und Vorderrad 12 zunächst in einer linearen Bewegung vom Lenkrohr 3 weg bewegt wird, bis die Drehung dieses Systems um den Knickpunkt 15 möglich ist.

Vorzugsweise sind zur Erhöhung der Stabilität des Rollers beim Fahren die faltbaren bzw. zerlegbaren Teile des Rollers im Fahrzustand zusätzlich auf dem Fachmann an sich bekannte Weise kraftschlüssig arretiert.

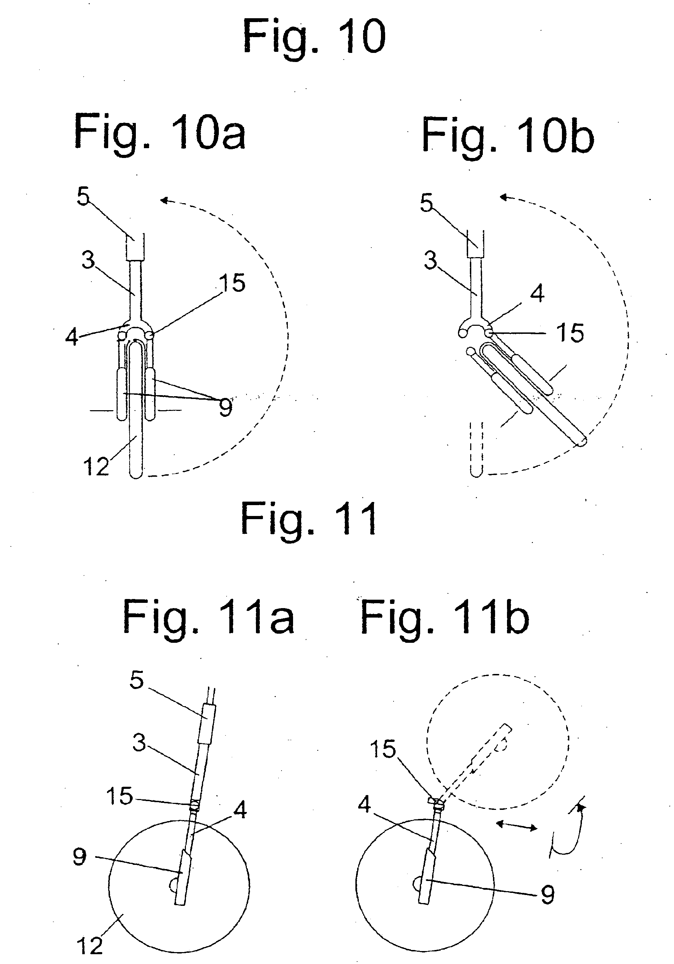

Fig. 10 zeigt für das Vorderrad eine zweite Variante für das Falten eines erfindungsgemäßen Rollers. Fig. 10a zeigt den Ausgangszustand und Fig. 10b den Zustand nach einem teilweisen Herausdrehen des Vorderrades 12. In Fig. 10a und 10b ist 3 das Lenkrohr, 4 die Vordergabel, 5 die Verbindungsstelle zwischen Lenkrohr 3 und Hauptrahmen 2, 15 der Knickpunkt und 9 bezeichnet die Gabelbeine. Bei der Faltvariante von Fig. 10 ist ein Gabelbein 9 lösbar mit dem oberen Teil der Vordergabel 4 verbunden, während das andere Gabelbein 9 zusammen mit dem Vorderrad 12 um den Knickpunkt 15 in Richtung des Verbindungspunktes 5 gedreht werden kann.

Vorzugsweise ist der Knickpunkt 15 eine Achse, die mit der Längsachse des Rollers einen von 0° verschiedenen Winkel bildet, so dass Vorderrad 12 durch Drehung um diese Achse 15 in eine obere Position hinter dem Lenker gelangen kann. Diese Position ist in den Fig. 8 und 12c bzw. 12d illustriert.

Fig. 11 zeigt für das Vorderrad eine dritte Variante für das Falten eines erfindungsgemäßen Rollers. Fig. 11a zeigt den Ausgangszustand und Fig. 11b den Zustand nach Verschieben der Anordnung aus Vordergabel und Vorderrad entlang der Längsachse des Rollers. In Fig. 11 bedeutet 5 die Verbindungsstelle von Hauptrahmen 2 und Lenkrohr 3, 4 die Vordergabel, 9 zwei Gabelbeine, 12 das Vorderrad und 15 einen Knickpunkt. Bei dieser Variante wird die Vordergabel 4 mit den beiden Gabelbeinen 9 zunächst am Knickpunkt 15 in einer im Wesentlichen geradlinigen Bewegung in Richtung der Längsachse des Rollers verschoben, bis ein Drehpunkt erreicht wird, um den die Vordergabel 4 sowie das daran befindliche Vorderrad 12 nach oben in Richtung der Verbindungsstelle 5 gedreht werden kann. Anschließend kann das Vorderteil mit Vordergabel 4 und Vorderrad 12 durch Drehen nach oben in Richtung der Verbindungsstelle 5 in eine Position neben dem Lenker gebracht werden.

Wie bei der Diskussion von Fig. 9 gezeigt, erfolgt auch bei dieser klappbaren bzw. zerlegbaren Ausführungsform des erfindungsgemäßen Rollers am Knickpunkt 15 vorzugsweise eine formschlüssige Führung bzw. Verbindung der Teile des Rollers. Hierzu sind dem Fachmann eine Reihe von Profilen und entsprechenden Konterprofilen bekannt. Zusätzlich sind diese Teile des Rollers im Fahrzustand auf dem Fachmann an sich bekannte Weise kraftschlüssig arretiert.

Fig. 12 zeigt eine Ausführungsform für einen faltbaren Roller gemäß der vorliegenden Erfindung. Fig. 12a zeigt eine Seitenansicht des Rollers im fahrbereiten Zustand mit den beiden Knickpunkten 15 und 16. Fig. 12b zeigt eine Vorderansicht des Rollers von Fig. 12a. Fig. 12c zeigt eine Seitenansicht des Rollers nach dem Falten des Vorderrades 12 um den Knickpunkt 15 und vor dem Falten des hinteren Rollerteils mit dem Hinterrad 11 in die entgegen gesetzte Richtung um den Knickpunkt 16. Fig. 12d zeigt eine Vorderansicht des Rollers von Fig. 12c. Fig. 12e zeigt eine Seitenansicht der vorderen Hälfte des gefalteten Rollers, wobei die Faltung des Vorbaus 6 mit dem Lenker sowie die Faltung des Hinterrades angedeutet sind. Fig. 12f zeigt schematisch eine Vorderansicht des vollständig gefalteten Rollers von Fig. 12e. Allerdings wird der erfindungsgemäße Roller im gefalteten Zustand in der Praxis in der Regel in einer kompakteren Form vorliegen, bei der einzelne Teile des Rollers in Aussparungen anderer Teile des Rollers (insbesondere von Hauptrahmen 2) greifen, um ein möglichst kleines Packmaß sicherzustellen.

Zur Erzielung eines kleinstmöglichen Packmaßes ist es vorteilhaft, wenn Vorderrad und Hinterrad jeweils direkt am Hauptrahmen seitlich anschließen. D.h. Vordergabel und Hinterrad-Aufhängung sollten vorzugsweise ober- oder unterhalb des Hauptrahmens verschwinden bzw. in Aussparungen im Hauptrahmen versenkt werden können.

Bei den in den Fig. 8 bis 12 gezeigten Ausführungsformen sind Vorder- und Hinterteil des erfindungsgemäßen Rollers mit dem Vorderrad 12 bzw. dem Hinterrad 11 im Knickpunkt 16 um eine im Hauptrahmen 2 angeordnete, im Allgemeinen senkrecht zur Querachse des Rollers liegende Achse drehbar. Ggf. kann aber der Knickpunkt 16 weggelassen werden oder der Knickpunkt 16 kann sich an anderer Stelle befinden. Erfindungsgemäß sind auch noch weitere Knickpunkte möglich.

Die in den Figuren 8 bis 12 gezeigten Faltmöglichkeiten sind Beispiele. Weitere Faltmöglichkeiten sind erfindungsgemäß denkbar. Erfindungsgemäß sind auch einseitige Radaufhängungen möglich, die eine weitere Verringerung des Packmaßes ermöglichen.

Eine weitere Faltmöglichkeit gemäß der vorliegenden Erfindung umfasst einen Schritt des Einklappens des Vorderrades, bei dem das Vorderrad mit dem Lenker um nahezu 180° gedreht wird (im Allgemeinen bis zu einem Einrastpunkt), an den beiden Federbeinen an der Federgabel eine Arretierung gelöst und dadurch eine Knickmöglichkeit nach oben in Richtung des Hauptrahmens freigegeben wird, wobei der Knickpunkt vorzugsweise unmittelbar auf der Höhe der Oberkante des Vorderrades ist. Da das Vorderrad nicht vollständig um 180° gedreht ist, schwenkt es beim Einklappen am Hauptrahmen vorbei.

Die Verbindungen der einzelnen Teile an den Knickpunkten 15, 16 erfolgt vorzugsweise durch ohne Werkzeug lösbare Verbindungen, insbesondere durch Schnellspannverschlüsse (z. B. Leichtschnellspanner) und Bajonett-Verschlüsse.

In der Regel wird der erfindungsgemäße Roller im eingeklappten Zustand auf dem Fachmann an sich bekannte Weise stabilisiert.

Der erfindungsgemäße Roller weist vorzugsweise mindestens eine weitere Trittfläche 10 auf. Eine solche Trittfläche 10 ist beispielsweise in den Figuren 1 und 13 gezeigt. Die Trittfläche 10 wird vorzugsweise zentral, d.h. auf der Verbindungslinie zwischen Vorderrad 12 und Hinterrad 11 angeordnet. Die Trittfläche 10 ist vorzugsweise an einem starren Schwingarm 17 befestigt. Diese Trittfläche 10 ist im Allgemeinen während der Fahrt in einer starren fixierten Position, so dass sich vorzugsweise der Abstand zwischen der Trittfläche 10 und dem Hinterrad 11 nicht ändert. Allerdings kann diese Trittfläche gegebenenfalls klappbar gestaltet sein.

Die Trittfläche 10 wird vorzugsweise am ungefederten Bereich befestigt und dient vorzugsweise zum Aufspringen beim Anrollen. Außerdem ist die Trittfläche 10 geeignet, in unwegsamem Gelände die "Bodenfreiheit" zu vergrößern, wenn die seitlichen Trittflächeneinheiten 1 wieder einklappen.

Aus Stabilitätsgründen befindet sich die weitere Trittfläche 10 vorzugsweise zentral zwischen dem Mittelpunkt von Vorderrad 12 und dem hinteren Ende von Hinterrad 11. Besonders bevorzugt befindet sich die weitere Trittfläche 10 zwischen dem Ende des Vorderrades und einem Punkt, der sich nicht mehr als 20 cm, ganz besonders bevorzugt nicht mehr als 10 cm hinter dem Mittelpunkt des Hinterrades befindet. Die Trittfläche 10 kann aus einem oder mehreren Teilen bestehen und sollte mindestens so groß sein, dass ein Fuß darauf zumindest teilweise Platz findet.

In Abhängigkeit vom Verwendungszweck des erfindungsgemäßen Rollers wird dieser gegebenenfalls mit einer Federung (auch als "Dämpfung" bezeichnet) ausgestattet sein. Während für die Fortbewegung in der Ebene auf glatten Oberflächen die Dämpfung von untergeordneter Bedeutung ist, ist die Federung bei Abfahrten über holpriges Gelände von großer Bedeutung.

Die Federung des erfindungsgemäßen Rollers kann auf verschiedene Weise erfolgen. Die Federung kann am Vorder- und/oder Hinterrad erfolgen. Im Allgemeinen ist mindestens das Vorderrad gefedert (frontgefedert). Dies erfolgt dadurch, dass als Vordergabel statt einer steifen Gabel eine Federgabel benutzt wird. Ein Roller, bei dem nur das Vorderrad gefedert ist und der sich durch ein geringeres Gewicht auszeichnet, kann als "Hardtail" - Roller bezeichnet werden. Bei den als "Fully" benennbaren Rollern sind dagegen der Front- und der Hinterteil gefedert (Front- und Heckfederung). Das lange Fahrwerk filtert die härtesten Stöße. Bei den vollgefederten ist im Allgemeinen der Komfort höher und die Traktion besser.

Die Federung kann im Lenkrohr 3 angebracht sein oder aber in den beiden Gabelbeinen 9 der Gabel (z. B. Vordergabel 4). Die Art der Federung ist beim erfindungsgemäßen Roller nicht beschränkt. In Hinblick auf den gewünschten Grad der Bequemlichkeit und die Kosten werden bestimmte Federungsarten bevorzugt. Erfindungsgemäß sind die leichteren luftgefederten Dämpferelemente gegenüber den schwereren Stahlfedermodellen vorteilhaft, wenn es auf das Gewicht des Rollers ankommt.

Eine Federgabel funktioniert, indem eine Hülse des Gabelbeins über einem Standrohr auf und ab gleitet. Die Gabelbeine reagieren auf die Konturen des Geländes, über die man rollt und sorgen für eine weiche Fahrt über Löcher und Schläge. Um Schläge abzufangen, besitzt die Gabel ein Dämpfungselement, entweder eine Luftkammer (Luft/Öl) oder eine Stahlfeder (Feder/Öl). Beide werden bei einem Stoß zusammen gedrückt und gehen dann wieder auseinander. Die Geschwindigkeit, mit der dies geschieht (Dämpfung), wird im Allgemeinen, außer in den einfachsten Fällen, durch eine Ölpatrone oder ein offenes Ölbad in einem der Gabelrohre kontrolliert. Üblicherweise haben Luft-Öl-Systeme geringere Federwege, sind aber leicht, und daher an Cross-country-Rollern zu finden. Feder-Öl-Systeme weisen größere Federwege auf und besitzen mehr Verstellmöglichkeiten, so dass sie besser für raues Gelände und Downhill-Fahrten geeignet sind.

Die Charakteristik einer Federgabel kann auf vielfältige Weise geändert werden. Beispielsweise bei einer Luft-Öl-Gabel durch den Tausch des Öls und bei einer Feder-Öl-Gabel durch den Austausch von Öl und Feder. Härtere Federn können eingebaut werden, falls die Gabel im Gelände regelmäßig durchschlägt oder wenn sie zu stark auf die Schläge des Untergrunds reagiert. Reagiert die Gabel dagegen nur bei großen Schlägen und bei kleinen Schlägen kaum, sollten die Federn durch weichere ersetzt werden.

Als Öl in der Gabel können Öle von verschiedener Viskosität verwendet werden. Hierdurch wird der Widerstand verändert, der der Dämpferstange entgegengesetzt wird, wenn die Gabel eintaucht. Falls die Gabel zu schnell auf den Untergrund reagiert oder der Roller beim Bremsen stottert, kann der Wechsel zu einem zähflüssigeren Öl helfen.

Zur Verwendung für Abfahrten in anspruchsvollem Gelände wird ein Roller gefordert, der bei hohen Geschwindigkeiten heftige Schläge abfangen kann. Bei Rollern für diesen, bei Mountainbikes "Enduro" genannten Bereich werden zur Federung vorzugsweise Stahlfedergabeln verwendet (Stahlfeder/Öl-Dämpfer). Hier bieten die langhubigen Forken, die ggf. auch mit einer Vario-Option ausgestattet sein können, gegenwärtig die beste Performance. Das Gewicht spielt hier eine eher untergeordnete Rolle. Für Abfahrten sind erfindungsgemäß Federgabeln mit großen Federwegen bevorzugt, die auch große Brocken mühelos schlucken, beispielsweise mit Federwegen von 80 bis 100 mm.

Vorteilhaft sind bei einem Roller für den Enduro-Bereich während der Fahrt die Federwege voll verstellbar, beispielsweise von rund 100 mm bis zu 130 mm Federweg vorn und hinten. Bei einer bekannten Vario-Federgabel sind die Einstellungen per Drehknopf verstellbar. Die Steilheit und Beschaffenheit der Strecke bestimmen darüber, wie straff oder weich die Federung abgestimmt wird.

Im Allgemeinen wird ein für Abfahrten in unwegsamen Gelände vorgesehener Roller der vorliegenden Erfindung an beiden Rädern gefedert (vollgefedert) sein. Hierbei wird in der Regel eine Federgabel am Vorderrad mit einer Federung am Heck kombiniert, wodurch das Hinterrad ebenfalls Schläge absorbieren kann. Luft-Öl- und Feder-Öl-Kombinationen, die man an Federgabeln findet, sind erfindungsgemäß auch für den hinteren Dämpfer vorteilhaft. Der hintere Dämpfer kann gegebenenfalls über eine Blockiermöglichkeit verfügen (Lock-out, Override-Mechanismus), die den Hinterbau nötigenfalls erstarren lässt. Vorteilhaft kann eine Druckstufendämpfung eingestellt werden, um die Einfedergeschwindigkeit zu regulieren.

Der erfindungsgemäße Roller verfügt im Allgemeinen über Bremsen. Die Art der verwendeten Bremsen ist beim erfindungsgemäßen Roller nicht beschränkt. Je nach der Verwendung der erfindungsgemäßen Roller sind bestimmte Bremsen vorteilhaft. Im Allgemeinen werden Scheibenbremsen (auch "Discstopper" genannt) und/oder Felgenbremsen verwendet.

Bei Rollern, die zur Verwendung in der Ebene auf glatten Oberflächen bestimmt sind, wird in der Regel eine Felgenbremse verwendet. Felgenbremsen haben den Vorteil eines geringen Gewichts und eines niedrigen Preises.

Bei Verwendung von dicken, komfortablen Reifen sind Cantileverbremsen vorteilhaft. Cantileverbremsen sind außerdem aufgrund ihres großen Felgenabstands relativ unempfindlich gegen Verschmutzung.

Bei Rollern, die zur Verwendung im bergigen unebenen Gelände bestimmt sind ("Downhill-Roller"), werden im Allgemeinen Bremsen verwendet wie sie auch für Mountainbikes oder bereits bekannte Mountainscooter verwendet werden. Für diese Anwendung der erfindungsgemäßen Roller haben sich Scheibenbremsen als vorteilhaft erwiesen.

Bei-Down-hill-Rollern sind zwar auch Cantileverbremsen verwendbar. Allerdings wird erfindungsgemäß bevorzugt eine V-Brake eingesetzt, da diese leichter eingestellt werden kann und in der Wartung unkompliziert ist. Eine V-Brake ist daher die Standardausstattung an den meisten derzeitigen Mountain- und Hybridbikes.
Die im Vergleich zu einer üblichen Felgenbremse langen Arme der V-Brakes sorgen für einen längeren Hebel und damit für mehr Bremskraft.

Für jeden Einsatzbereich sind mittlerweile zuverlässige Scheibenbremsen im Handel erhältlich: Scheibenbremsen sind normalerweise etwas schwerer als Cantilever - Bremsen oder V-Brakes. Jedoch ist bei diesen eine höhere und besser dosierbare Bremskraft gegeben. Scheibenbremsen haben außerdem den großen Vorteil, dass die Bremsleistung nicht von der Witterung beeinflusst wird. Während die Bremskraft von Cantilever - Bremsen und V-Brakes bei Nässe stark nachlässt, reagieren Scheibenbremsen immer gleich, selbst bei leichten Beschädigungen von Laufrad oder Felge.

Erfindungsgemäß werden im Allgemeinen mechanisch oder hydraulisch betätigte Scheibenbremsen eingesetzt. Mechanische Scheibenbremsen benötigen einen höheren Wartungsaufwand. Außerdem reicht zwar ihre Bremsleistung mittlerweile nahezu an die hydraulischer Systeme, die Dosierbarkeit der Bremsleistung bei mechanischen Scheibenbremsen ist aber immer noch schlechter als bei hydraulischen Scheibenbremsen. Mechanische Scheibenbremsen arbeiten andererseits mit normalen Bremszügen (Seilzügen) und benötigen daher keine speziellen Bremshebel. Mechanische Scheibenbremsen sind daher wesentlich billiger.

Hydraulische Scheibenbremsen sind den herkömmlichen V-Brakes bei der Bremskraft überlegen, da normale Felgenbremsen durch die Länge der Züge nicht so kräftig zupacken. Bei Downhill-Rollern werden daher bevorzugt hydraulische Scheibenbremsen eingesetzt.

Wenn es bei den erfindungsgemäßen Rollern auf eine besondere Geländegängigkeit ankommt und eine weitgehende Drehung des Vorderrades wichtig ist, kann optional ein Gyro-Steuersatz das Verdrehen der Bremskabel selbst dann verhindern, wenn das Vorderrad um 360 Grad rotiert.

Die Bereifung der erfindungsgemäßen Roller ist nicht beschränkt. Größe und Art der Reifen zur Verwendung im erfindungsgemäßen Roller bestimmen sich in erster Linie nach der Verwendung der Roller. Vorder- und Hinterrad können unterschiedlich groß sein, wobei für spezielle Anwendungsbereiche der Durchmesser des Vorderrades beispielsweise größer sein kann als der Durchmesser des Hinterrads. Die Reifendurchmesser sind bei Anwendungen im Stadtbereich üblicherweise kleiner als bei Anwendungen in hügeligem Gelände. Bei Verwendung in der Ebene auf glatter Fahrbahn werden im Allgemeinen Reifen mit einem nicht zu groben Profil verwendet. Bei der Verwendung auf freiem Feld, beispielsweise für Abfahrten in hügeligem Gelände mit grober Bodenbeschaffenheit, werden in der Regel grobstollige Reifen verwendet.

Für Abwärtsfahrten werden meist grobstolligere Reifen verwendet als bei Cross-Country-Fahrten. Grobstolligere Reifen bringen die Bremskraft der hier vorzugsweise zu verwendenden großen Scheibenbremsen auf den Boden.

Die Felgenform kann bei den erfindungsgemäßen Rollern in weitem Umfang variieren. Erfindungsgemäß können vollflächige Felgen verwendet werden oder Felgen, die mehrere Kreisausschnitte umfassen. Darüber können Räder mit Speichen verwendet werden, deren Anzahl im Vorder- und Hinterrad des erfindungsgemäßen Rollers in weitem Umfang variiert werden kann.

In einer bevorzugten Ausführungsform des erfindungsgemäßen Rollers, die vor allem in unwegsamem Gelände Anwendung findet, befindet sich der Verbindungspunkt 5 zwischen Lenkrohr 3 und Hauptrahmen 2 in der oberen Hälfte der durch Lenkrohr 3 und Vordergabel 4 gedachten Achse. Bei dieser Ausführungsform haben die Räder im Allgemeinen einen Durchmesser von mehr als 15 cm, vorzugsweise von mehr als 25 cm und ganz besonders bevorzugt von mehr als 30 cm. Im Allgemeinen ist bei dieser Ausführungsform die optionale Trittfläche 10 kürzer als die Summe der Durchmesser von Vorder- und Hinterrad.

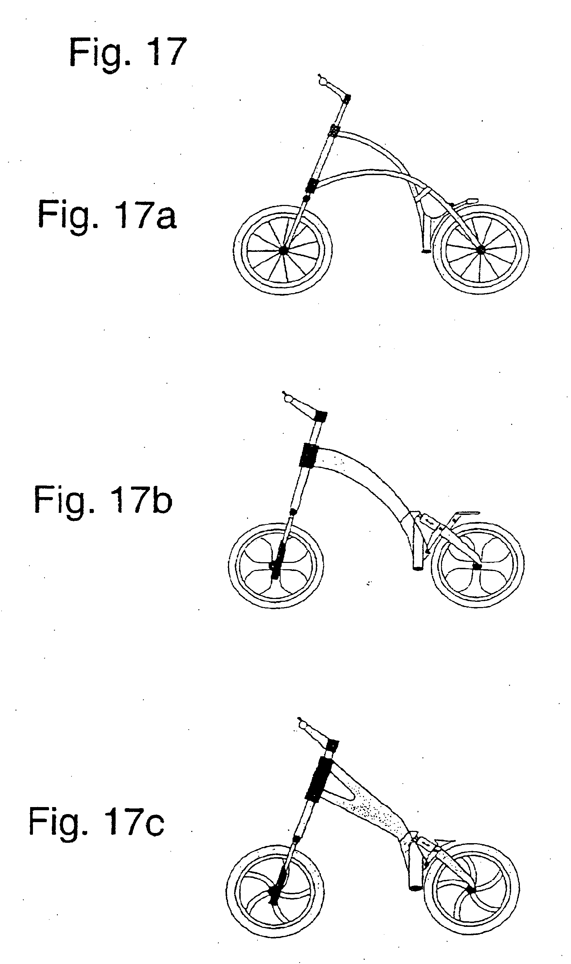

Der Rahmen des erfindungsgemäßen Rollers kann je nach Verwendungszweck des Rollers verschiedene Formen aufweisen. Beispiele für besonders geeignete Rahmenkonstruktionen sind in Figur 17 gezeigt. Diese reichen von stabileren, in der Regel schwereren Rahmenkonstruktionen, die insbesondere bei Rollern für Abwärtsfahrten eingesetzt werden ("downhill-Roller") (siehe z.B. Figur 17c) bis zu weniger robusten, dafür aber leichteren Rahmenkonstruktionen (siehe z.B. Figur 17a).

Wie aus den Fig. 17a und 17c ersichtlich, ist erfindungsgemäß auch eine Rahmenkonstruktion möglich, bei der der Hauptrahmen über zwei oder mehr Verbindungspunkte mit dem Lenkrohr verbunden ist.

Die Besonderheit der Erfindung besteht darin, dass sich der Rahmen vor dem Hinterrad nicht in der Nähe des Bodens befinden muss, damit ein herkömmliches Roller - Trittbrett verwendet werden kann.

Der Hauptrahmen 2 erstreckt sich von der Verbindungsstelle 5 zwischen Hauptrahmen 2 und Lenkrohr 3 im Wesentlichen gradlinig oder leicht gekrümmt in Richtung von Hinterrad 11.

Beim erfindungsgemäßen Roller, der vor allem in unwegsamem Gelände Anwendung findet, befindet sich der Verbindungspunkt 5 zwischen Lenkrohr 3 und Hauptrahmen 2 in der oberen Hälfte der durch Lenkrohr 3 und Vordergabel 4 gedachten Achse. Hierbei erstreckt sich der Hauptrahmen 2 von der Verbindungsstelle 5 (von Hauptrahmen 2 und Lenkrohr 3) im Wesentlichen gradlinig oder leicht gekrümmt in Richtung von Hinterrad 11, wobei der Winkel zwischen Hauptrahmen 2 und der Tangente 19 an Vorderrad 12 und Hinterrad 11 (bzw. der Bodenoberfläche) 30 bis 45°, bevorzugt 35 bis 40° und ganz besonders bevorzugt 37 bis 39° beträgt.

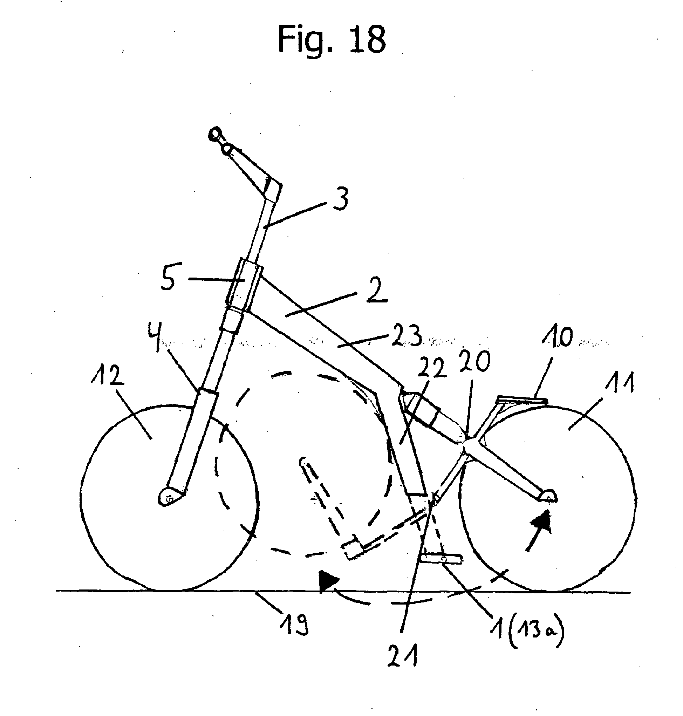

Eine Ausführungsform ist in Figur 18 illustriert. In der in Figur 18 gezeigten faltbaren Ausführungsform des erfindungsgemäßen Rollers befindet sich in der hinteren Hälfte eines zweiteiligen Hauptrahmens 2 eine Verbindungsstelle 20, bei der die beiden Teile des Hauptrahmens 2 lösbar miteinander verbunden sind. Wird diese Verbindungsstelle 20 geöffnet, kann der das Hinterrad 11 und die zentrale Trittfläche 10 umfassende Hinterbau um den Drehpunkt 21 (der auch als Knickpunkt bezeichnet werden kann) in Richtung von Vorderrad 12 gedreht werden. Der Drehpunkt 21 befindet sich an einem nach unten in Richtung der Tangente 19 abgeknickten Teil 22 von Hauptrahmen 2. Hierbei wird somit das Hinterrad unter den Hauptrahmen 2 eingeschwenkt. Für das Platz sparende Verstauen des Rollers dieser Ausführungsform wird dann gegebenenfalls das Vorderrad 12 abmontiert.

Bei der in Figur 18 gezeigten besonders bevorzugten Ausführungsform des erfindungsgemäßen Rollers knickt somit der vordere Teil von Hauptrahmen 2 ab, wobei das Teil 23 vor dem Knick und das Teil 22 hinter dem Knick jeweils im Wesentlichen gerade sind. Am Ende des nach unten abgeknickten Teils 22 befindet sich hierbei die Trittflächeneinheit 1. Der untere Teil 22 und die Tangente 19 bilden bei dieser Ausführungsform im Allgemeinen einen Winkel von 65 bis 90°, vorzugsweise von 70 bis 80° und besonders bevorzugt von 73 bis 78 °. Der Abstand zwischen den Mittelpunkten von Vorderrad 12 und Hinterrad 11 beträgt bei dieser Ausführungsform im Allgemeinen 65 bis 90 cm, vorzugsweise 70 bis 85 cm und ganz besonders bevorzugt von 74 bis 80 cm. Vorderrad 12 und Hinterrad 11 haben hierbei vorzugsweise Reifendurchmesser im Bereich von 14 bis 16 Zoll. Es hat sich zudem gezeigt, dass im nicht ausgeklappten Zustand der Trittflächeneinheit 1 der Abstand zwischen der Antrittsfläche 13a und Tangente 19 vorteilhaft im Bereich von 13 bis 20 cm, vorzugsweise im Bereich von 15 bis 18 cm und ganz besonders bevorzugt von 16 bis 17 cm beträgt. Im ausgeklappten Zustand befindet sich die Trittflächeneinheit 1 im Allgemeinen in einem Abstand von 4,5 bis 7 cm, vorzugsweise von 5 bis 6 cm von der Tangente 19.

Bei der in Figur 18 gezeigten Ausführungsform ist es von Vorteil, wenn sich die Federmechanik für die ausklappbare Trittflächeneinheit 1 in dem abgeknickten Teil 22 von Hauptrahmen 2 befindet.

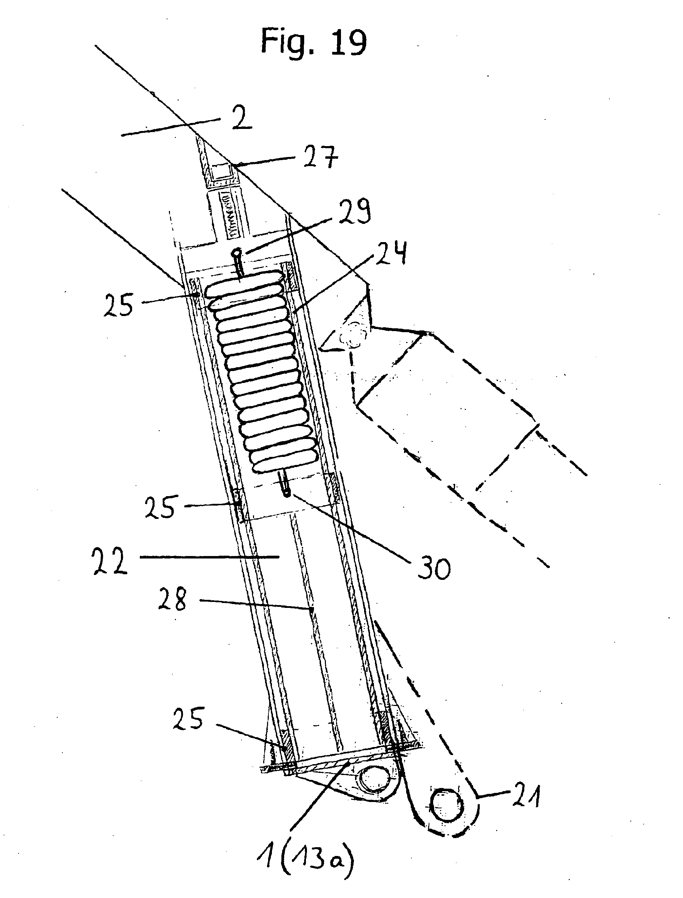

Ein Beispiel für eine derartige Anordnung der Federmechanik ist in der Figur 19 dargestellt. In Figur 19 befindet sich die Trittflächeneinheit 1 bzw. die Antrittsfläche 13a an einem Gleitrohr 24. Durch Niederdrücken der Antrittsfläche 13a der Trittflächeneinheit 1 gegen eine Federkraft wird die Trittflächeneinheit 1 ausgeklappt bzw. ausgefahren. Zwischen Gleitrohr 24 und abgeknicktem Teil 22 befinden sich mindestens ein Gleitring und / oder Kugellager 25. Die in Figur 19 gezeigte Feder 26 kann beispielsweise durch eine Stellschraube 27 leicht vorgespannt werden. Bei der in Figur 19 gezeigten Feder 26 handelt es sich um eine Zugfeder. Es kann allerdings auch eine Druckfeder verwendet werden. Die Feder 26 ist an der Stelle 30 im Gleitrohr 24 und an der Stelle 29 an Teil 22 befestigt. In Figur 19 ist zudem der Drehpunkt 21 (Knickpunkt) angedeutet, um den herum der in Figur 19 nicht gezeigte, das Hinterrad 11 und die zentrale Trittfläche 10 aufweisende Hinterbau nach vorne unter den Hauptrahmen 2 geschwenkt werden kann. In Fig. 19 bedeutet 28 eine Aussteifung im Gleitrohr 22.

Die vorstehend beschriebene Ausführungsform zeichnet sich durch eine besondere Stabilität und Komfort beim Betrieb aus.

In einer weiteren Ausführungsform des Rollers, die vor allem auf ebenem Gelände, insbesondere im Stadtbereich Anwendung findet, befindet sich der Verbindungspunkt 5 zwischen Lenkrohr 3 und Hauptrahmen 2 in der unteren Hälfte, vorzugsweise im unteren Drittel der durch Lenkrohr 3 und Vordergabel 4 gedachten Achse. Bei dieser Ausführungsform haben die Räder im Allgemeinen einen Durchmesser von weniger als 50 cm, vorzugsweise von weniger als 35 cm und ganz besonders bevorzugt von weniger als 25 cm. Im Allgemeinen ist bei dieser Ausführungsform die optionale Trittfläche 10 kürzer als die Summe der Durchmesser von Vorder- und Hinterrad.

Die Geometrie des erfindungsgemäßen Rollers kann in erheblichem Umfang variiert werden, so dass leicht eine Anpassung an Körpergröße, Schrittlänge, Armlänge usw. möglich ist.

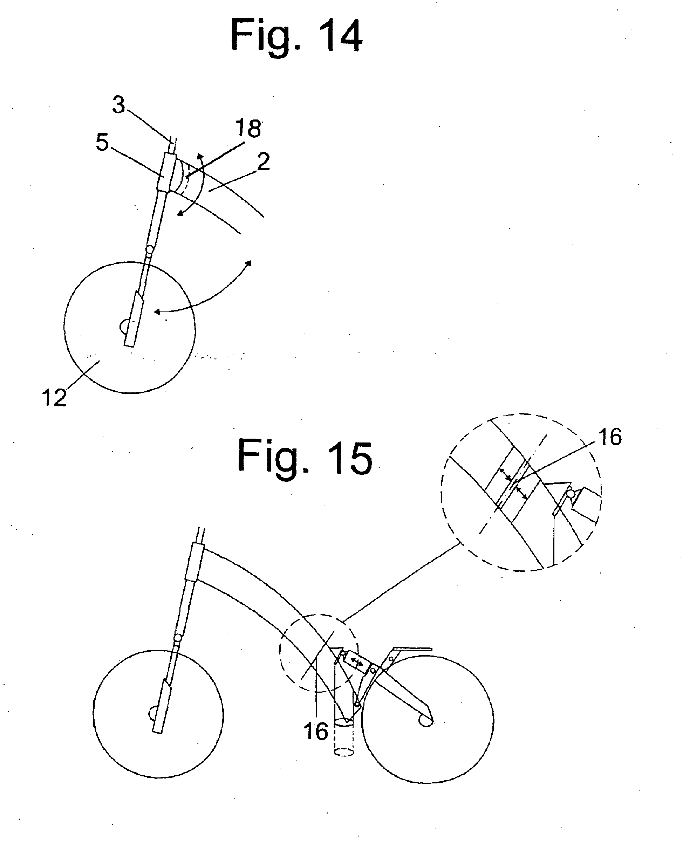

Beispielsweise kann gemäß Fig. 14 der Winkel zwischen Lenkrohr 3 und Hauptrahmen 2 verstellt werden. Dies erfolgt vorzugsweise durch ein Lenkgelenk 18 an der Verbindungsstelle 5 zwischen Lenkrohr 3 und Hauptrahmen 2. Hierdurch kann beispielsweise der Radstand variiert werden.

Bei Verwendung eines zweiteiligen Hauptrahmens 2 wie er insbesondere bei Faltrollern verwendet wird, kann der Hauptrahmen 2 verlängert werden. Im Falle eines Faltrollers wird die Verlängerung des Hauptrahmens 2 vorzugsweise vom Knickpunkt 16 ausgehend in beiden Richtungen im gleichen Ausmaß erfolgen (siehe Fig. 15). Hierdurch wird eine optimale Passung im gefalteten Zustand des Rollers erreicht.

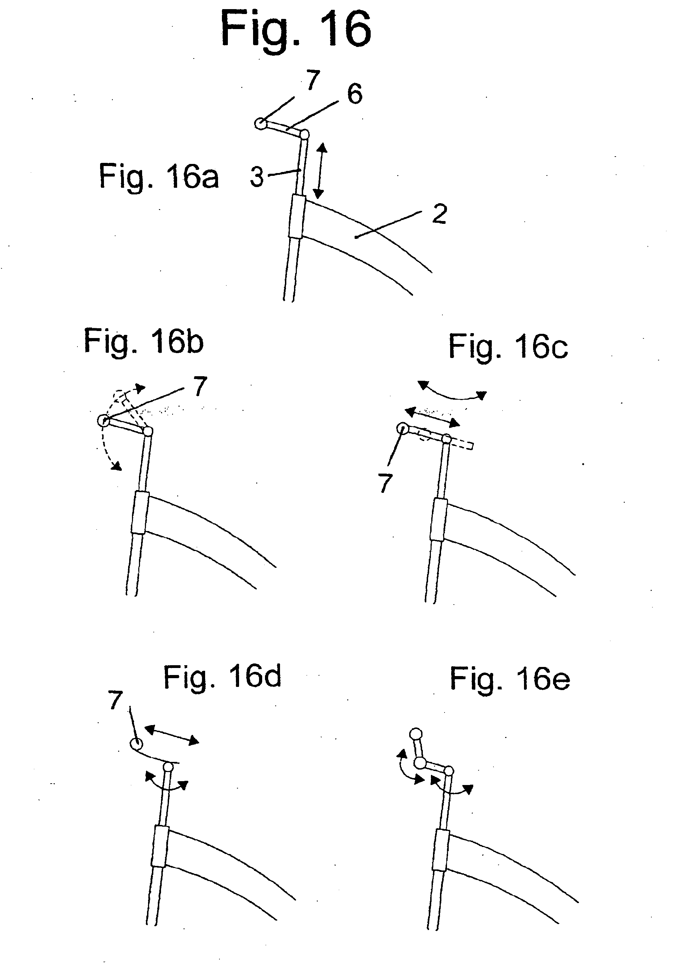

Fig. 16 zeigt, wie auf an sich bekannte Weise die Lenkergeometrie verstellt werden kann. Fig. 16a illustriert die Höhenverstellbarkeit des Lenkrohrs 3. Fig. 16b zeigt die Höhenverstellbarkeit des Vorbaus, wobei der Lenker 7 unabhängig vom Lenkrohr 3 in der Höhe verstellt werden kann. Der Vorbau kann im Bereich des Lenkrohrs nach vorne oder hinten verschoben werden (Figur 16c). Figur 16d zeigt eine Kombination der Varianten aus Fig. 16b und Fig. 16c. In der Variante von Figur 16e gibt es eine Untergliederung des Vorbaus. Die Funktion von Fig. 16b kann ausgeführt und die Höhe des Vorbaus verändert werden. Zusätzlich können die im Mountainbike-Bereich üblichen Lenker und Verstellmöglichkeiten für Lenker verwendet werden.

Für die Lenkung können im Allgemeinen zwei unterschiedliche Steuersätze verwendet werden: Gewindelose Steuersätze, auch Ahead - Steuersatz genannt, und Steuersätze mit Gewinde. Durch Umstellung von Lenker 7 und Vorbau 6 kann der Steuersatz eingestellt werden. In einer bevorzugten Ausführungsform ist der Lenker einklappbar bzw. versenkbar.

Der erfindungsgemäße Roller kann optional eine Sitzfläche aufweisen, die an einem Sitzrohr (in den Figuren nicht gezeigt) angebracht ist, das wiederum im Allgemeinen mit dem Rahmen des Rollers verbunden ist. Für besonders raue Fahrbedingungen kann statt einer einfachen eine zweifache Sitzrohrklemmung verwendet werden.

Der erfindungsgemäße Roller kann je nach Verwendung mit weiteren Vorrichtungen ausgestattet sein, wie z. B. einer Beleuchtung, Vor- und/oder Rückstrahlern, einer Klingel, einer abschließenden Sicherung, Halterungen und Fächern für diverses Gepäck, Schutzblechen etc.

Die Trittflächen können erfindungsgemäß mit einem Profil versehen sein, so dass der Fahrer seine Schuhe ähnlich wie bei Mountainbikes mittels eines Klickmechanismus in der Trittfläche verriegeln und entriegeln kann.

Im Allgemeinen besteht der Rahmen des erfindungsgemäßen Rollers aus mehreren Holmen und Stützen, die über Gelenke (z. B. Drehgelenke) miteinander verbunden sind und in besonderen Ausführungsformen relativ zueinander verschwenkbar sind. Die Holmen und Stützen sind im Allgemeinen jeweils im Wesentlichen gerade starre Bauteile mit Profilformen, z.B. O-Profile mit eckigem oder abgerundetem Querschnitt.

Als Materialien für die erfindungsgemäßen Roller können die bislang für Roller und Fahrräder bekannten Materialien verwendet werden. Die Auswahl der Materialien ist ansonsten nicht beschränkt und richtet sich insbesondere nach dem Verwendungszweck der Roller. Vorzugsweise bestehen die Rahmenteile aus einem Metall (z. B. Aluminium oder Stahl, z. B. dünnwandige Stahlrohre), einer Metalllegierung oder einem Kunststoff, der ggf. mit Glasfasern etc. verstärkt sein kann. Ein bevorzugter Kunststoff ist Carbon. Die Verwendung einer Scandium-Aluminium-Legierung (ca. 2-3 Gew.-% Scandium) kann ungefähr 10 % Gewichtsersparnis beim Rahmen erbringen.

Der erfindungsgemäße Roller findet Anwendung als Fortbewegungsmittel im Stadtbereich sowie im Zweiradsport. In Abhängigkeit von dem beabsichtigten Einsatz sind im Zweiradsport mindestens drei Grundvarianten denkbar:
1. Ultra: extrem leichte Bauweise für den Einsatz im Bergsport oder im Stadtbereich, da es hierbei im Wesentlichen auf das Gewicht ankommt. Dieses Model wird häufig ungefedert sein.
2. Allround: vielseitigste Anwendung, weniger leicht, dafür gefedert. Diese Variante findet Anwendung im Bergsport bzw. Freizeitsport.
3. Extrem: extrem stabile Bauweise, zudem sehr gut gefedert. Das Gewicht ist hierbei von untergeordneter Bedeutung. Anwendungsgebiete sind Downhill, Funsport, Streetsport.

Der Roller der vorliegenden Erfindung kann durch die Muskelkraft des Fahrers oder mittels eines Motors (z.B. eines Benzin- oder Elektromotors) angetrieben werden.

Die erfindungsgemäßen Roller (die auch als "Trailgerät mit Roller-Funktion" bezeichnet werden können) zeichnen sich durch eine verbesserte Geländetauglichkeit und Manövrierfähigkeit aus. Dies ist insbesondere bei deren Verwendung im öffentlichen Bereich, z.B. auf Gehwegen und Plätzen, aber auch in unwegsamem Gelände von Vorteil. Außerdem kann bei der faltbaren Variante des erfindungsgemäßen Rollers ein sehr kleines Packmaß erzielt werden.

Die erfindungsgemäßen Roller ermöglichen einen kleinen Radstand. Es kann ein Roller realisiert werden, der zwar leicht ist, aber dennoch beste Fahreigenschaften im freien Gelände hat. Der erfindungsgemäße Roller bietet eine bessere Balance als bekannte Roller (Fahrer steht nicht auf der Längsachse) und eine variable Bodenfreiheit. Für wechselnde Anforderungen (Rollerbetrieb und Trailbetrieb) bestehen optimale Bedingungen. Beim Einsatz einer zusätzlichen zentralen Trittfläche ist während der Fahrt eine maximale Bodenfreiheit möglich.

## Patentansprüche

1. Roller mit einem Rahmen, mindestens einem Vorderrad (12), mindestens einem Hinterrad (11) und mit einer Lenkeinrichtung (3, 6, 7), mit der mindestens ein Vorderrad (12) lenkbar ist, **dadurch gekennzeichnet, dass** der Roller auf der linken und/oder rechten Seite der Verbindungsachse zwischen den Vorder- und Hinterrädern (Längsachse des Rollers) zwischen dem Radmittelpunkt eines Vorderrades und dem hinteren Ende eines Hinterrades eine seitlich ausklappbare Trittflächeneinheit (1) aufweist, die keine Kurbelfunktion ausüben kann, also nicht um 360° um eine senkrecht zur Längsachse des Rollers stehende Querachse des Rahmens gedreht werden kann, wobei die Trittflächeneinheit(en) (1) mechanisch oder mittels eines Motors ausgeklappt werden kann (können) und beim mechanischen Ausklappen durch Krafteinwirkung durch den Fahrer die Trittflächeneinheit (1) bei Wegfall der Belastung in ihre Ausgangsposition zurückkehrt, wobei sich ein Verbindungspunkt (5) zwischen einem Lenkrohr (3) und einem Hauptrahmen (2) in der oberen Hälfte der durch Lenkrohr (3) und eine Vordergabel (4) gedachten Achse befindet und sich der Hauptrahmen (2) im Wesentlichen gradlinig oder leicht gekrümmt in Richtung von Hinterrad (11) erstreckt, und wobei ein Winkel zwischen Hauptrahmen (2) und einer Tangente (19) an Vorderrad (12) und Hinterrad (11) 30 bis 45° beträgt.

2. Roller nach Anspruch 1, **dadurch gekennzeichnet, dass** die Trittflächeneinheiten (1) einzeln oder gemeinsam höhenverstellbar sind.

3. Roller nach Anspruch 1 oder 2, **dadurch gekennzeichnet, dass** der Winkel 35 bis 40° beträgt.

4. Roller nach einem der Ansprüche 1 bis 3, **dadurch gekennzeichnet, dass** der Hauptrahmen (2) einen vorderen Teil (23) vor einem Knick und einen hinteren Teil (22) hinter dem Knick aufweist, wobei das vordere Teil (23) und das hintere Teil (22) jeweils im Wesentlichen gerade sind und das vordere Teil (23) nach unten abknickt.

5. Roller nach Anspruch 4, **dadurch gekennzeichnet, dass** sich an einem unteren Ende des nach unten abgeknickten hinteren Teils (22) die Trittflächeneinheit (1) befindet.

6. Roller nach Anspruch 4 oder 5, **dadurch gekennzeichnet, dass** der hintere Teil (22) und die Tangente (19) einen Winkel von 65 bis 90° bilden.

7. Roller nach einem der Ansprüche 4 bis 6, **dadurch gekennzeichnet, dass** ein Abstand zwischen den Mittelpunkten von Vorderrad (12) und Hinterrad (11) 65 bis 90 cm beträgt.

8. Roller nach einem der Ansprüche 1 bis 7, **dadurch gekennzeichnet, dass** er faltbar und/oder zerlegbar ist.

9. Roller nach Anspruch 8, **dadurch gekennzeichnet, dass** er um mindestens einen Knickpunkt (15) faltbar ist, der sich zwischen dem Verbindungspunkt (5) und einer Vordergabel (4) befindet.

10. Roller nach Anspruch 8, **dadurch gekennzeichnet, dass** sich in der hinteren Hälfte eines zweiteiligen Hauptrahmens (2) eine Verbindungsstelle (20) befindet, bei der die beiden Teile des Hauptrahmens (2) lösbar miteinander verbunden sind.

11. Roller nach Anspruch 10, **dadurch gekennzeichnet, dass** bei geöffneter Verbindungsstelle (20) der das Hinterrad (11) umfassende Hinterbau um einen Drehpunkt (21) in Richtung von Vorderrad (12) gedreht werden kann.

12. Roller nach Anspruch 11, **dadurch gekennzeichnet, dass** sich der Drehpunkt (21) an einem nach unten in Richtung der Tangente (19) abgeknickten hinteren Teil (22) des Hauptrahmens (2) befindet.

13. Roller nach einem der Ansprüche 1 bis 12, **dadurch gekennzeichnet, dass** sich die mindestens eine Trittflächeneinheit (1), d.h. deren Mittelpunkt, in der hinteren Hälfte des Rollers vor dem Mittelpunkt der Hinterradnabe befindet.

## Claims

1. Scooter with a frame, at least one front wheel (12), at least one rear wheel (11), and with a steering gear (3, 6, 7), with which at least one front wheel (12) is tractable, **characterized in that** the scooter comprises on the left and / or right side of the connecting axis between the front and rear wheels, respectively, (longitudinal axis of the scooter) between the centre of a front wheel and the rear end of a rear wheel a laterally fold-out foot rest unit (1), which cannot exert the function of a crank, i.e., which cannot be rotated by 360° around a transverse axis of the frame which is perpendicular to the longitudinal axis of the scooter, whereby the foot rest unit(s) (1) can be folded out mechanically or by means of a motor and whereby upon mechanically folding out by force effect by the driver, the foot rest unit (1) returns in its starting position upon discontinuation of the force, whereby a juncture (5) between a steering shaft (3) and a main frame (2) is located in the upper half of the axis through the steering shaft (3) and a front fork (4) and the main frame (2) extends essentially in a straight line or slightly bent into the direction of the rear wheel (11), and whereby an angle between the main frame (2) and a tangent (19) at front wheel (12) and rear wheel (11) is 30 to 45 °.

2. Scooter according to claim 1, **characterized in that** the foot rest units (1) are singly or jointly height adjustable.

3. Scooter according to claim 1 or 2, **characterized in that** the angle is 35 to 40°.

4. Scooter according to any of claims 1 to 3, **characterized in that** the main frame (2) comprises a front part (23) in front of an inflection point and a rear part (22) behind the inflection point, whereby the front part (23) and the rear part (22) are each essentially straight and the front part (23) bends down from the main frame (2).

5. Scooter according to claim 4, **characterized in that** the foot rest unit (1) is located at the end of the rear part (22) which is bent downwards.

6. Scooter according to claim 4 or 5, **characterized in that** the rear part (22) and the tangent (19) form an angle of from 65 to 90°.

7. Scooter according to any of claims 4 to 6, **characterized in that** a distance between the centre points of front wheel (12) and rear wheel (11) amounts to 65 to 90 cm.

8. Scooter according to any of claims 1 to 7, **characterized in that** it is foldable and / or dismountable.

9. Scooter according to claim 8, **characterized in that** it is foldable at least around an inflection point (15), which is located between the juncture (5) and a front fork (4).

10. Scooter according to claim 8, **characterized in that** a juncture (20) is located in the rear half of a two-part main frame (2) where the two parts of the main frame (20) are detachably connected to each other.

11. Scooter according to claim 10, **characterized in that** after the juncture (20) is open, the rear machine section comprising the rear wheel (11) can be rotated around a pivot point (21) in the direction of the front wheel (12).

12. Scooter according to claim 11, **characterized in that** the pivot point (21) is located in a part (22) of main frame (2) which is bent downwards in the direction of the tangent (19).

13. Scooter according to any of claims 1 to 12, **characterized in that** the at least one foot rest unit (1), i.e. its centre point, is located in the rear half of the scooter ahead of the centre of the driving collar of the rear wheel.

## Revendications

1. Trottinette avec un cadre, au moins une roue avant (12), au moins une roue arrière (11) et avec un système de direction (3, 6, 7), avec lequel au moins une roue avant est dirigeable (12), **caractérisée en ce que** la trottinette présente latéralement un repose-pieds dépliant sur le côté gauche ou droit de l'axe de connexion entre les roues avant et arrière (axe longitudinal de la trottinette) entre le centre de la roue avant et l'extrémité arrière de la roue arrière, qui ne peut exercer aucune fonction de pédale, c'est-à-dire qui ne peut être tourné de 360° autour d'un axe transversal du cadre, perpendiculaire à l'axe longitudinal de la trottinette, dans lequel le ou les repose-pieds (1) peuvent être dépliés mécaniquement ou à l'aide d'un moteur et retournent dans leur position de départ en cas de dépliage mécanique par une pression due au cycliste, dès que la pression cesse, dans lequel une jonction (5) se situe entre un tube de direction (3) et un cadre principal (2) dans la moitié supérieure de l'axe passant par le tube de direction (3) et une fourche antérieure (4) et le cadre principal (2) s'étend pour l'essentiel en ligne droite ou légèrement incurvée en direction de la roue arrière, et dans lequel un angle entre le cadre principal (2) et une tangente (19) à la roue avant (12) et à la roue arrière (11) a une valeur de 30 à 45°.

2. Trottinette selon la revendication 1, **caractérisée en ce que** les repose-pieds (1) sont réglables en hauteur individuellement ou conjointement.

3. Trottinette selon la revendication 1 ou 2, **caractérisée en ce que** l'angle est de 35 à 40°.

4. Trottinette selon l'une des revendications 1 à 3, **caractérisée en ce que** le cadre principal (2) présente une partie antérieure (23) avant un pli et une partie postérieure derrière un pli (22), dans lequel la partie antérieure (23) et la partie postérieure (22) sont respectivement linéaires pour l'essentiel et la partie antérieure (23) se plie vers le bas.

5. Trottinette selon la revendication 4, **caractérisée en ce que** le repose-pieds (1) se trouve à une extrémité inférieure de la partie postérieure (22) pliée vers le bas.

6. Trottinette selon la revendication 4 ou 5, **caractérisée en ce que** la partie postérieure (22) et la tangente (19) forment un angle de 65 à 90°.

7. Trottinette selon l'une des revendications 4 à 6, **caractérisée en ce que** la distance entre le centre de la roue avant (12) et celui de la roue arrière (11) est de 65 à 90 cm..

8. Trottinette selon l'une des revendications 1 à 7, **caractérisée en ce qu'**elle est pliable ou démontable.

9. Trottinette selon la revendication 8, **caractérisée en ce qu'**elle est pliable à au moins un point de flexion (15) qui se situe entre la jonction (5) et la fourche avant (4).

10. Trottinette selon la revendication 8, **caractérisée en ce qu'**un point de jonction (20) se trouve dans la moitié postérieure d'un cadre pricipal (2) constitué de deux parties, où les deux parties du cadre principal (2) sont jointes l'une à l'autre et détachables l'une de l'autre.

11. Trottinette selon la revendication 10, **caractérisée en ce que** la construction postérieure comprenant la roue arrière (11) peut être tournée autour d'un centre de rotation (21) en direction de la roue avant (12) lorsque le point de jonction (20) est ouvert.

12. Trottinette selon la revendication 11, **caractérisée en ce que** le centre de rotation (21) se trouve à la partie postérieure (22) du cadre principal (2) pliée vers le bas en direction de la tangente (19).

13. Trottinette selon l'une des revendications 1 à 12 **caractérisée en ce qu'**au moins un des repose-pieds (1), i.e. son point central, se trouve dans la moitié postérieure de la trottinette avant le point central du moyeu de la roue arrière.
